(19) Europäisches Patentamt
European Patent Office
Office européen des brevets

(11) EP 2 218 763 A2

(12) # EUROPÄISCHE PATENTANMELDUNG

(43) Veröffentlichungstag:
**18.08.2010 Patentblatt 2010/33**

(51) Int Cl.:
***C09K 19/32*** *(2006.01)* ***G02B 5/30*** *(2006.01)*

(21) Anmeldenummer: **10000534.7**

(22) Anmeldetag: **20.01.2010**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(30) Priorität: **14.02.2009 DE 102009009093**

(71) Anmelder:
- **Merck Patent GmbH**
  **64293 Darmstadt (DE)**
- **LOFO High Tech Film GmbH**
  **79576 Weil am Rhein (DE)**

(72) Erfinder:
- **Fiebranz, Bernd**
  **64839 Münster (DE)**
- **Rieger, Bernhard**
  **64839 Münster (DE)**
- **Pauluth, Detlef**
  **64372 Ober-Ramstadt (DE)**
- **Jansen, Axel**
  **64293 Darmstadt (DE)**
- **Siemann, Ulrich**
  **79576 Weil am Rhein (DE)**
- **Herm, Ilona**
  **79400 Kandern (DE)**

(54) **Optische Kompensationsfolien**

(57) Kompensationsfolien für Flüssigkristallanzeigen mit unten genannten Zusätzen stäbchenförmiger Flüssigkristallen, Polarisatorplatten, welche mindestens eine solche Kompensationsfolie aufweisen, Flüssigkristallanzeigen, welche Kompensationsfolien der genannten Art aufweisen, sowie Verfahren zur Herstellung der genannten Kompensationsfolien, Polarisatorplatten und Flüssigkristallanzeigen, die Verwendung der unten genauer beschriebenen Verbindungen als Zusätze zu Kompensationsfolien für Flüssigkristallanzeigen, sowie weitere unten ersichtliche Erfindungsgegenstände.

EP 2 218 763 A2

## Beschreibung

Die Erfindung betrifft optische Kompensationsfolien für Flüssigkristallanzeigen mit Zusätzen bestimmter stäbchenförmiger Flüssigkristalle wie nachfolgend beschrieben, Polarisatorplatten, welche mindestens eine solche Kompensationsfolie aufweisen, Flüssigkristallanzeigen, welche Kompensationsfolien der genannten Art aufweisen, sowie Verfahren zur Herstellung der genannten Kompensationsfolien, Polarisatorplatten und Flüssigkristallanzeigen, die Verwendung der nachfolgend beschriebenen flüssigkristallinen Verbindungen als Zusätze zu Kompensationsfolien für Flüssigkristallanzeigen, sowie weitere unten ersichtliche Erfindungsgegenstände.

Für die Verbesserung der Blickwinkelabhängigkeit des Kontrastes und die Verminderung der Farbverschiebung unter höheren Betrachtungswinkeln werden bei Flüssigkristallanzeigen üblicherweise optische Kompensationsfolien zwischen den Polarisatorfolien und der Flüssigkristallzelle eingesetzt. Diese Folien haben spezifische optische Retardationseigenschaften und sind auf die jeweilige Art der Flüssigkristallanzeige abgestimmt.

Im nachfolgenden wird für Flüssigkristallanzeigen auch der Begriff "LCD" (Liquid Crystal Display) verwendet. LCDs sind dem Fachmann bekannt. Handelsübliche TV-Geräte, Desktop-Monitore oder Laptops bzw. Notebooks enthalten üblicherweise einen Bildschirm auf Grundlage der Flüssigkristalltechnik. Hintergrundlicht wird dabei durch einen Polarisationsfilter linear polarisiert, passiert eine Flüssigkristallschicht, die, z.B. in Abhängigkeit von der gewünschten Helligkeit, die Polarisationsebene des Lichtes dreht, und tritt durch einen zweiten Polarisationsfilter wieder aus. Zusammen mit Treiberelektronik, Farbfiltern und Glasscheiben bilden diese Komponenten das sogenannte "Panel".

TFT (Thin Film Transistor) bezeichnet die heute bei Desktop-Monitoren und Notebooks übliche Aktivmatrix-Variante der LCD-Panels, bei der jedes Pixel durch einen eigenen Transistor angesteuert wird. Im Unterschied dazu besitzen Passivmatrix-Displays nur am Rand Steuerelektronik, die einzelnen Pixel werden zeilen- und spaltenweise geschaltet. Sie sind deshalb deutlich träger im Bildaufbau und werden wegen ihres geringeren Stromverbrauchs vornehmlich in Kleingeräten wie Mobiltelefonen, tragbaren digitalen Videogeräten oder MP3-Playern eingesetzt. Die Begriffe LCD- und TFT-Monitor werden, obwohl streng genommen unterschiedlich, mittlerweile oft synonym verwendet.

Die Paneltypen unterscheiden sich im wesentlichen durch die Art der Ausrichtung der Flüssigkristalle zwischen den Substraten der Flüssigkristallzelle. In TN-Panels (Twisted Nematic) sind die Flüssigkristallmoleküle ohne elektrisches Feld parallel zur Oberfläche der Substrate ausgerichtet, wobei ihre Vorzugsrichtung in Richtung senkrecht zur Oberfläche eine helikale Verdrillung aufweist, und richten sich bei angelegter Spannung in Richtung des senkrecht zur Oberfläche anliegenden elektrischen Feldes aus. Sie zeigen eine vergleichsweise hohe Blickwinkelabhängigkeit, die mit Kompensationsfolien nur teilweise reduziert werden kann. Sie zeigen nicht sehr schnelles Schaltverhalten.

Beim In-Plane Switching (IPS) sind die Flüssigkristallmoleküle parallel zur Substratoberfläche, aber unverdrillt, ausgerichtet. Die Flüssigkristallzelle weist nur auf einem der Substrate eine Elektrodenschicht auf. Dadurch wird bei Anlegen einer Spannung ein elektrisches Feld in Richtung parallel zur Substratoberfläche erzeugt, welches die Flüssigkristallmoleküle innnerhalb der Panelfläche umorientiert. Der Kontrast ist dadurch wesentlich weniger blickwinkelabhängig als bei TN-Panels. Allerdings wurde erst durch die verbesserte S-IPS- und Dual-Domain-IPS-Technik auch die Blickwinkelabhängigkeit der Farbdarstellung verkleinert. Durch die schwachen Felder waren die Schaltzeiten anfangs sehr lang, aktuelle Varianten können aber durchaus mit schnellen VA-Panels mithalten.

Die Flüssigkristallmoleküle in VA-Panels (Vertically Aligned) sind im feldlosen Zustand weitgehend senkrecht zur Substratoberfläche ausgerichtet, und besitzen eine negative dielektrische Anisotropie, so dass sie beim Anlegen des elektrischen Feldes zwischen den Substraten in eine Richtung parallel zur Oberfläche umorientiert werden. Da VA-Panels ohne angelegte Spannung kein Licht durchlassen, erreichen sie ein tiefes Schwarz und damit sehr hohe Kontrastwerte. Subtypen umfassen MVA (Multi-Domain VA), PVA (Patterned VA) und ASV (Advanced Super View). Diese unterteilen die Zellen zusätzlich in Bereiche mit unterschiedlicher Vorzugsrichtung und erzielen dadurch eine große Blickwinkelstabilität. VA Panel zeichnen sich insbesondere durch kurze Umschaltzeiten aus, so dass sie und ihre Herstellung im Rahmen der Erfindung bevorzugt sind.

Aus dem Stand der Technik sind Kompensationsfilme bekannt, basierend auf orientierten, polymerisierten Schichten von reaktiven Flüssigkristallen (oft auch als "reaktive Mesogene" bzw. "RM" bezeichnet), die auf einer Trägerfolie, beispielsweise einem Zelluloseacetatfilm, wie z.B. Triacetylzellulose (TAC) aufgebracht sind. Die Kompensationsfolien werden üblicherweise auf die Polarisationsfolie ("Polarisator") laminiert. Der Polarisator besteht typischerweise aus einer mit Jod getränkten und gereckten PVA Folie und ggf. einer oder zwei Schutzfolien. Als Schutzfolien werden beispielsweise TAC-Filme verwendet.

Weiterhin ist aus dem Stand der Technik bekannt, dass diskotische (scheibchenförmige) Flüssigkristallmoleküle direkt in den TAC-Film eingebracht werden, und durch Reckung des TAC Films eine bestimmte optische Retardationswirkung erreicht wird. Diese TAC-Filme können auch direkt als Schutzfolie für den Polarisator verwendet werden. Anstelle von diskotischen können auch kalamitische (stäbchenförmige) Flüssigkristallmoleküle direkt in den TAC-Film eingebracht werden.

Ausserdem sind Anordnungen bekannt, bei denen einer der Schutzfilme der Polarisatorplatte direkt die optische Kompensationsfolie darstellt, wodurch besonders dünne Schichten ermöglicht werden.

Darüber hinaus wurden viele andere Anordnungen gefunden, die jeweils spezifische Vorteile aufweisen. Allen ist jedoch gemeinsam, dass sie zur Erhöhung des Betrachtungswinkels mindestens eine optische Kompensationsfolie aufweisen.

Diese kann beispielsweise aus einem Zelluloseacylat, insbesondere einem Zellulose-$C_1$-$C_7$-alkanoat (Z-$C_1$-$C_7$-A), z.B. Zelluloseacetat und/oder -propionat (z.B. CAP) oder vorzugsweise Zelluloseacetat (Triacetyl-Zellulose, TAC) als Basis bestehen. Normalerweise ist eine Zelluloseacylat-Folie optisch isotrop in Bezug auf die senkrechte Achse zur Folienfläche (mit relativ geringer Retardation). Um als optische Kompensationsfolie dienen zu können, muss sie jedoch optische Anisotropie und vorzugsweise eine hohe Retardation (= optische Verzögerung) zeigen. Neben gereckten doppelbrechenden synthetischen Polymermaterialien wurden auch anisotrope Schichten, die diskotische Moleküle beinhalten, vorgeschlagen, die durch Ausrichten der diskotischen Moleküle und anschließende Fixierung in der ausgerichteten Form hergestellt werden. US 6,559,912 und US 2003/0218709 beschreiben Zelluloseacetatfolien mit diskotischen Molekülen z.B. auf 1,3,5-Triazinbasis oder polymere Flüssigkristalle oder Keton-, Ether- und/oder Ester-Verbindungen oder solche mit polymerisierbaren Resten.

US 6,778,242 beschreibt Kompensationsfolien auf der Basis von TAC-Filmen enthaltend kalamitische oder diskotische Flüssigkristallmoleküle, welche mindestens 2 aromatische Ringsysteme enthalten.

Bei der Verwendung von derartigen Zusätzen können jedoch Schwierigkeiten auftreten, beispielsweise bei der Verträglichkeit mit den bei der Herstellung von Z-$C_1$-$C_7$-A (insbesondere TAC)-Folien verwendeten Lösungsmitteln und anderen Zusätzen. Ausserdem kann es wegen geringer Verträglichkeit der verwendeten Zusätze mit den Endprodukten oder wegen zu hoher Flüchtigkeit und/ oder Diffusionsneigung zu mangelnder Dauerhaftigkeit (Haltbarkeit) der erhaltenen Folien kommen.

Auch gibt es, wie oben bereits angedeutet, eine Fülle von unterschiedlichen LCD-Systemen, so dass es schwierig sein kann, Folien an die gewünschten Bedingungen anzupassen. So ist denkbar, dass nur eine Folie zur Kompensation verwendet wird, oder zwei oder mehr, und dass je nach Dicke und anderen Erfordernissen die Eigenschaften wie Dicke und Masse etc. der Kompensationsfolie(n) an bestimmte Anforderungen eines LCD anpassbar sein müssen.

Die optische Verzögerung (Retardation) der optischen Kompensationsfolie Ro in Richtung der Folienebene (sogenannte "in plane" Retardation; oft auch als Re bezeichnet) und Rth in Richtung der Foliendicke (sogenannte "out of plane" Retardation) werden jeweils durch die folgenden Formeln beschrieben:

$$Ro\ (= Re) = (nx - ny) \times d \qquad (IV)$$

$$Rth = \{ nz - [(nx + ny)/2] \} \times d \qquad (V)$$

Dabei ist nx der Brechungsindex entlang der langsamen Achse in der Ebene der Folie (d.h. derjenigen Achse mit dem größten Brechungsindex, d.h. derjenigen Schwingungsrichtung, in der eine Welle die langsamere Ausbreitungsgeschwindigkeit hat); ny ist der Brechungsindex entlang der schnellen Achse (d.h. derjenigen Achse mit dem geringsten Brechungsindex, d.h. derjenigen Schwingungsrichtung, in der eine Welle die schnellere Ausbreitungsgeschwindigkeit hat) in der Ebene der Folie senkrecht zu nx; nz ist der Brechungsindex in Richtung der Foliendicke (d.h. senkrecht zu nx und ny); d ist die Dicke der Folie (in nm).

Für ungereckte negativ-C-Kompensationsfilme gilt im allgemeinen nx=ny>nz, damit ergeben sich für Rth mit der Formel (V) negative Werte.

Die Einstellung der geeigneten Werte für Ro und Rth hängt vom jeweils verwendeten Typ der Flüssigkristallzelle und der dadurch bewirkten Änderung des Polarisationszustandes bei der Ansteuerung der Zelle ab.

Unterschiedliche Retardationswerte zur Korrektur werden für die üblichen Typen der Anzeigen der Bilddarstellung wie z.B. TN (twisted nematic), STN (super twisted nematic), VA (vertically aligned), IPS (in plane switching) benötigt.

Weiterhin hat sich gezeigt, dass die im Stand der Technik vorgeschlagenen TAC-Filme oft eine unzureichende Dispersion (Abhängigkeit der Doppelbrechung bzw. Retardation von der Wellenlänge des Lichts) aufweisen, was, insbesondere bei VA-LCDs, zu einer Verschlechterung des Kontrastes vor allem bei großen Blickwinkeln (d.h. bei großer Abweichung von der Blickrichtung senkrecht auf die Anzeige) führt.

Angesichts der oben genannten Schwierigkeiten besteht die Aufgabe, Kompensationsfolien zu finden, welche eine genaue Einstellung der Retardationswerte Ro (= Re) und Rth ermöglichen und eine hohe Dauerhaftigkeit dieser Werte aufweisen, bei denen die verwendeten Zusätze sowohl während der Herstellung als auch im Endprodukt eine gute Verträglichkeit aufweisen und keine Färbung oder Trübung hervorrufen, und mit denen die erforderlichen optischen Eigenschaften durch geeignete Maßnahmen wie Recken flexibel auf gewünschte Displays eingestellt werden können, beispielsweise hinsichtlich der verwendbaren Dicke und der Frage, ob anstelle von zwei Kompensationsfolien nur eine

eingesetzt werden kann. Wenn die verwendeten Substanzen über einen großen Konzentrationsbereich verträglich sind, können die Retardationswerte sowohl über die Konzentration der verwendeten Zusätze als auch durch speziell angepasste Nachbehandlung variiert werden, was eine große Flexibilität für den Anwendungsfall ergäbe.

Weiterhin sollten die Kompensationsfolien eine angepasste optische Dispersion aufweisen, und, insbesondere bei VA-LCDs, einen hohen Kontrast auch bei großen Blickwinkeln ermöglichen.

Es wurde nun gefunden, dass es durch Verwendung bestimmter stäbchenförmiger Verbindungen möglich ist, ein bis alle der in der Aufgabenstellung angegebenen Ziele zu erreichen.

Insbesondere wurde gefunden, dass sich flüssigkristalline oder mesogene Verbindungen mit höchstens einem aromatischen Ring besonders gut als Zusätze für TAC Filme zur Verwendung in Kompensationsfolien eignen.

Es wurde gefunden, dass diese Verbindungen sehr gute Retardationseigenschaften und ausreichende Stabilität (Temperatur/Feuchte Lagertest) zeigen. Weiterhin wurde gefunden, dass diese Verbindungen bei Verwendung in TAC-Filmen eine veränderte Dispersion der Retardation im Vergleich zu Verbindungen mit mehr als einem aromatischen Ring zeigen. Damit kann eine verbesserte Dispersion des TAC-Films bzw. der Kompensationsfolie erreicht werden, was zu einer Erhöhung des winkelabhängigen Kontrastes für die VA-LCDs beitragen kann. LCD-Simulationsrechnungen haben gezeigt, dass insbesondere eine negative Dispersion (d.h. die optische Retardation vergrößert sich bei zunehmender Wellenlänge) des Ro-Wertes ("in-plane" Retardation) eine Verbesserung der Kontrastverhältnisse für die Displays zur Folge hat.

Gegenstand der Erfindung ist somit eine optische Kompensationsfolie, vorzugsweise für Flüssigkristallanzeigen, auf Zelluloseacylat-Basis, insbesondere auf CAP- oder vorzugsweise Zelluloseacetatbasis, **dadurch gekennzeichnet, dass** sie eine oder mehrere Verbindungen, vorzugsweise ausgewählt aus mesogenen oder flüssigkristallinen Verbindungen, besonders bevorzugt kalamitischen (stäbchenförmigen) Verbindungen, mit zwei oder mehr Ringen aufweist, wobei höchstens einer dieser Ringe ein aromatischer Ring ist.

Ein weiterer Gegenstand der Erfindung ist ein Verfahren zur Herstellung einer optischen Kompensationsfolie (vorzugsweise für Flüssigkristallanzeigen), die eine oder mehrere Verbindungen mit zwei oder mehr Ringen wie vor- und nachstehend definiert aufweist, wobei diese Verbindungen während der Herstellung mit den Ausgangsmaterialien für die Kompensationsfolie vermischt werden. Vorzugsweise wird die Folie in einem anschließenden Schritt mindestens in einer, beispielsweise in einer bis drei (x, y und z, beispielsweise in z-Richtung mittels anschließend zu verwerfender Schrumpffolien), vorzugsweise in zwei Richtungen gereckt.

Ein weiterer Gegenstand der Erfindung ist eine Polarisationsplatte (vorzugsweise für Flüssigkristallanzeigen), welche ein Paar transparente Schutzfilme und eine polarisierende Membran zwischen den Schutzfilmen aufweist, wobei mindestens einer der transparenten Schutzfilme mindestens eine optische Kompensationsfolie auf Zelluloseacylatbasis aufweist, die eine oder mehrere Verbindungen mit zwei oder mehr Ringen wie vor- und nachstehend definiert beinhaltet, sowie ein Verfahren zu deren Herstellung.

Ein weiterer Gegenstand der Erfindung ist eine Flüssigkristallanzeige, die mindestens eine optische Kompensationsfolie aufweist, die eine oder mehrere Verbindungen mit zwei oder mehr Ringen wie vor- und nachstehend definiert beinhaltet, sowie ein Verfahren zu deren Herstellung.

Ein weiterer Gegenstand der Erfindung ist die Verwendung einer oder mehrerer Verbindungen mit zwei oder mehr Ringen wie vor- und nachstehend definiert zur Herstellung von optischen Kompensationsfolien für Flüssigkristallanzeigen, wobei mindestens eine dieser Verbindungen mindestens einer Kompensationsfolie bei der Herstellung der Kompensationsfolie zugesetzt und vorzugsweise in einem weiteren Schritt die Kompensationsfolie dann zur Herstellung einer Flüssigkristallanzeige verwendet wird.

Die vor- und nachstehend verwendeten allgemeinen Ausdrücke und Symbole haben, soweit nicht anders angegeben, soweit sie nicht bereits vorstehend auch in der Einleitung bereits definiert sind, vorzugsweise die vorstehen oder nachfolgend genannten Bedeutungen, wobei für jeden Erfindungsgegenstand, unabhängig von den anderen, ein, mehrere oder alle allgemeineren Ausdrücke oder Symbole durch nachfolgend genannte spezifischere Definitionen ersetzt werden können, was jeweils zu bevorzugten Ausführungsformen der Erfindung führt.

Die erfindungsgemäßen Kompensationsfolien zeigen optische Anisotropie, d.h. unterschiedliche Brechungsindices n in mindestens zwei der Raumrichtungen x, y und z. Die Doppelbrechung der optischen Kompensationsfolie $\Delta n_o$ in Richtung der Folienebene und $\Delta n_{th}$ in Richtung der Foliendicke werden durch die folgenden Formeln beschrieben:

$$\Delta n_o \ (= \Delta n_e) = (nx - ny) \qquad \text{(I)}$$

$$\Delta n_{th} = \{ nz - [(nx + ny)/2] \} \qquad \text{(II)}$$

Dabei ist nx der Brechungsindex entlang der langsamen Achse in der Ebene der Folie (d.h. derjenigen Achse mit dem größten Brechungsindex, d.h. derjenigen Schwingungsrichtung, in der eine Welle die langsamere Ausbreitungsgeschwindigkeit hat); ny ist der Brechungsindex entlang der schnellen Achse (d.h. derjenigen Achse mit dem geringsten Brechungsindex, d.h. derjenigen Schwingungsrichtung, in der eine Welle die schnellere Ausbreitungsgeschwindigkeit hat) in der Ebene der Folie senkrecht zu nx; nz ist der Brechungsindex in Richtung der Foliendicke (d.h. senkrecht zu nx und ny).

Die optische Verzögerung R (Retardation) einer Kompensationsfolie ist definiert als das Produkt aus Doppelbrechung $\Delta n$ und Schichtdicke d gemäß folgender Formel:

$$R = \Delta n \times d \qquad \text{(III)}$$

Somit ergibt sich die Retardation der optischen Kompensationsfolie Ro in Richtung der Folienebene ("in plane" Retardation) bzw. Rth in Richtung der Foliendicke ("out of plane" Retardation) gemäß den folgenden Formeln:

$$Ro\ (= Re) = (nx - ny) \times d \qquad \text{(IV)}$$

$$Rth = \{\ nz - [(nx + ny)/2]\ \} \times d \qquad \text{(V)}$$

wobei d die Dicke der Folie bezeichnet.

Der Brechungsindex, die Doppelbrechung und die optische Retardation ändern sich üblicherweise in Abhängigkeit von der Wellenlänge des Lichtes. Diese Abhängigkeit wird auch als (optische) Dispersion bezeichnet. Die meisten optischen Medien zeigen eine Abnahme des Brechungsindex mit zunehmender Wellenlänge (normale Dispersion). Einige optische Medien zeigen dagegen eine Zunahme des Brechungsindex mit zunehmender Wellenlänge (ano(r)male Dispersion).

Vor- und nachstehend bezeichnet der Begriff "negative (optische) Dispersion" ein Material bzw. eine Folie mit anormaler Dispersion, worin der Absolutwert der Doppelbrechung ($\Delta n$) mit zunehmender Wellenlänge ($\lambda$) zunimmt, z.B. $|\Delta n(450)| < |\Delta n(550)|$ und $\Delta n(450)/\Delta n(550) < 1$, wobei $\Delta n(450)$ und $\Delta n(550)$ die Doppelbrechung bei einer Wellenlänge von 450nm bzw. 550nm bedeuten. Der Begriff "positive (optische) Dispersion" bezeichnet ein Material bzw. eine Folie mit normaler Dispersion, worin der Absolutwert der Doppelbrechung ($\Delta n$) mit zunehmender Wellenlänge ($\lambda$) abnimmt, z.B. $|\Delta n(450)| > |\Delta n(550)|$ und $\Delta n(450)/\Delta n(550) > 1$ . Siehe auch A. Uchiyama, T. Yatabe "Control of Wavelength Dispersion of Birefringence for Oriented Copolycarbonate Films Containing Positive and Negative Birefringent Units". J. Appl. Phys. Vol. 42 pp 6941-6945 (2003).

Da die optische Retardation bei einer bestimmten Wellenlänge direkt proportional zur Schichtdicke ist, kann die optische Dispersion entweder als Dispersion der Doppelbrechung, z.B. durch das Verhältnis $\Delta n(450)/\Delta n(550)$, oder als Dispersion der Retardation ("Retardationsdispersion"), z.B. durch das Verhältnis R(450)/R(550), angegeben werden, wobei R(450) und R(550) die Retardation bei einer Wellenlänge von 450nm bzw. 550nm bedeuten.

Da die Schichtdicke sich nicht mit der Wellenlänge ändert, ist in einem Material oder einer Folie mit negativer bzw. anormaler Dispersion, analog zur Doppelbrechung, auch $R(450)/R(550) < 1$ und $|R(450)| < |R(550)|$, und in einem Material oder einer Folie mit positiver oder normaler Dispersion $R(450)/R(550) > 1$ und $|R(450)| > |R(550)|$. Dies gilt gleichermassen für die Retardationswerte Ro und Rth.

Die Retardation ($R(\lambda)$) eines Materials kann durch Ellipsometrie bestimmt werden, z.B. unter Verwendung eines "M2000 spectroscopic ellipsometer" von J. A. Woollam Co.. Damit kann die optische Verzögerung einer doppelbrechenden Probe (in nm) über einen bestimmten Wellenlängenbereich, typischerweise, 370nm bis 1000nm, gemessen werden. Aus diesen Werten kann die Dispersion ($R(450)/R(550)$ oder $\Delta n(450)/\Delta n(550)$) berechnet werden.

Die vor- und nachstehend angegebenen Retardationswerte wurden, falls nicht anders angegeben, mit einem Woollam WVASE M2000 spectroscopic ellipsometer gemessen.

Die vor- und nachstehend angegebenen Werte für die Retardation R, den Brechungsindex n und die Doppelbrechung $\Delta n$ beziehen sich, falls nicht anders angegeben, auf eine Wellenlänge von 550 nm (gemessen bei Raumtemperatur).

Der Begriff "Ring" bedeutet einen carbocyclischen, heterocyclischen, aromatischen oder heteroaromatischen, organischen Rest. Die Ringe können gesättigt, oder teilweise oder vollständig ungesättigt sein. Im nachfolgenden werden gesättigte oder teilweise ungesättigte Ringe als "nicht-aromatisch" und vollständig ungesättigte Ringe als "aromatisch"

bezeichnet. Die Ringe können monocyclisch oder polycyclisch sein (wie z.B. Bicyclooctan), oder eine Spiroverknüpfung aufweisen (wie z.B. Spiro[3.3]heptan). Zwei oder mehr dieser Ringe können auch durch eine Einfachbindung oder eine Brückengruppe verbunden sein, oder zusammen einen kondensierten Rest bilden. So ist im Sinne dieser Anmeldung z.B. ein Cyclohexyl- oder Cyclohexenylrest ein nichtaromatischer Ring, ein Bicyclooctylrest ein polycyclischer, nichtaromatischer Ring, ein Spiroheptylrest ein spiroverküpfter, nichtaromatischer Ring, ein Phenylrest ein aromatischer Ring, ein Naphthylrest ein kondensierter Rest bestehend aus zwei aromatischen Ringen, und ein Indanrest ein kondensierter Rest bestehend aus einem aromatischen und einem nichtaromatischen Ring.

Optische Kompensationsfolien werden nachfolgend auch nur als "Kompensationsfolien" bezeichnet. Erfindungsgemäß bevorzugt sind optische Kompensationsfolien auf Zelluloseacylat-Basis, insbesondere auf CAP- oder vorzugsweise Zelluloseacetatbasis.

Zelluloseacylat bedeutet insbesondere ein Zellulosetriacylat, wobei die Acylreste gleich oder (insbesondere statistisch) unterschiedlich sein können, vorzugsweise ein entsprechendes Zellulose-tri-$C_1$-$C_7$-alkanoat, vorzugsweise -tri-$C_1$-$C_4$alkanoat, wie -butyrat, -propionat und/oder -acetat, wie insbesondere CAP (Celluloseacetopropionat) oder TAC (Cellulosetriacetat oder Triacetylcellulose).

Vorzugsweise liegt der Grad der Acyl-Substitution (Degree of acyl Substitution = DS), also die Anzahl der pro Zellulose-Untereinheit (Monosaccharid-Untereinheit mit 6 Kohlenstoffatomen) gebundenen Acylreste, bei 2,4 bis 3, insbesondere zwischen 2,7 und 2,98.

Beispielsweise hat im Falle von Triacetylcellulose das Celluloseacetat vorzugsweise einen Essigsäuregehalt von 59,0 bis 61,5 %, insbesondere von 59,5 bis 61,3 %. Der Ausdruck "Essigsäuregehalt" bedeutet dabei die Gewichtsmenge an gebundener Essigsäure je $C_6$-Untereinheit der Acetylcellulose. Die experimentelle Bestimmung kann beispielsweise nach ASTM: D-817-91 ("Tests of Cellulose Acetate) oder entsprechenden Vorschriften bestimmt werden. Soweit nicht anders angegeben, beziehen sich die vor- und nachstehend angegebenen Werte des Essigsäuregehaltes auf das Verfahren ASTM: D-817-91.

Die Polymolekularität (das Verhältnis von Gewichtsmittel zu Zahlenmittel), auch als Polydispersität bezeichnet, also das Verhältnis von stoffmengenbezogenem Mittelwert der Molmasse ($M_w$ = weight average molecular weight) zu anzahlbezogenem Mittelwert der Molmasse ($M_n$ = number average molecular weight), für erfindungsgemäße bzw. erfindungsgemäß herstellbare Zelluloseacatatfolien kann beispielsweise im Bereich von 1,5 bis 7 liegen, wie z.B. zwischen 2 und 4. Das Molekulargewicht wird dabei mittels Gelpermeationschromatographie mit Chloroform oder Methylenchlorid als Lösungsmittel bestimmt.

Eine erfindungsgemäße Kompensationsfolie ist vorzugsweise eine gereckte, insbesondere in zwei Richtungen (biaxial) gereckte Folie, deren Dicke, Reckungsparameter und Gehalt an Verbindungen mit zwei oder mehr Ringen oder kondensierten Ringen wie vor- und nachstehend definiert so ausgewählt sind, dass sie die unten als bevorzugt dargelegten Retardationswerte Ro (=Re) und Rth hat.

Vorzugsweise weist eine erfindungsgemäße Kompensationsfolie einen Gehalt von 0,5 bis 10 Gewichtsprozent, insbesondere von 2 bis 8 Gewichtsprozent, noch stärker bevorzugt von 2 bis 6 Gewichtsprozent, bezogen jeweils auf das Gesamtgewicht der Kompensationsfolie, an Verbindungen mit zwei oder mehr Ringen oder kondensierten Ringen wie vor- und nachstehend definiert auf.

"Gewicht" (z.B. in Gewichtsprozent oder Gew.-%) ist in dieser Offenbarung gleichbedeutend mit Masse.

Die erfindungsgemäße optische Kompensationsfolie auf Zelluloseaylatbasis beinhaltet mindestens eine Verbindung mit zwei oder mehr Ringen wie vor- und nachstehend definiert, insbesondere zur Einstellung einer geeigneten Retardation Ro und Rth wie oben definiert. Die Verfahren der Herstellung von erfindungsgemäßen Produkten und die Verwendung beinhaltet als funktionales Merkmal vorzugsweise ebenfalls den Zweck der Einstellung einer geeigneten Retardation Ro und Rth wie oben definiert.

Die erfindungsgemäßen Verbindungen mit zwei oder mehr Ringen sind vorzugsweise ausgewählt aus Formel I

$$R^1\text{-}A^1\text{-}(Z^1\text{-}A^2)_m\text{-}R^2 \qquad \text{I}$$

worin

$R^1$ und $R^2$ jeweils unabhängig voneinander F, Cl, Br, I, OH, -CN, -$NO_2$, - NCO, -NCS, -OCN, -SCN, -$NH_2$, -$SF_5$, geradkettiges oder verzweigtes Alkyl oder Alkoxy mit 1 bis 12 C-Atomen, worin auch eine oder mehrere $CH_2$-Gruppen durch -O-, -S-, -CO-, - CO-O-, -O-CO-, -O-CO-O-, -CH=CH-, -C=C-, -$NR^0$- -CO-$NR^0$- -$NR^0$-CO- so ersetzt sein können, dass O- und/oder S-Atome nicht direkt miteinander verknüpft sind, und worin auch ein oder mehrere H-Atome durch F, Cl oder CN ersetzt sein können,

$A^1$ und $A^2$ jeweils unabhängig voneinander einen Rest ausgewählt aus
der Gruppe A) bestehend aus nichtaromatischen, mono- oder polycyclischen, carbo- oder heterocyclischen Ringen mit 5 bis 10, vorzugsweise 5, 6, 7 oder 8 Ringatomen, wobei auch zwei oder mehr dieser Ringe einen kondensierten Rest bilden können, und wobei die einzelnen Ringe auch ein- oder mehrfach substituiert sein können, und/oder
der Gruppe B) bestehend aus aromatischen oder heteroaromatischen Ringen mit 5 bis 10, vorzugsweise 5 oder 6 Ringatomen, welche auch ein- oder mehrfach substituiert sein können, und/oder
der Gruppe C) bestehend aus kondensierten Resten bestehend aus einem oder mehreren Ringen der Gruppe A) und genau einem Ring der Gruppe B), wobei die einzelnen Ringe auch ein- oder mehrfach substituiert sein können,
wobei höchstens einer der vorhandenen Reste $A^1$ und $A^2$ aus Gruppe B) oder C) ausgewählt ist,

$Z^1$ bei jedem Auftreten gleich oder verschieden -COO-, -OCO-, $-CH_2O-$, $-OCH_2-$, $-CH_2S-$, $-SCH_2-$, $-CF_2O-$, $-OCF_2-$, $-CH_2CH_2-$,$-CH_2CF_2-$, $-CF_2CH_2-$, $-C_2F_4-$, -CH=CH-, -CH=CF-, -CF=CH-, -CF=CF-, -C≡C- oder eine Einfachbindung, vorzugsweise-COO-, -OCO- oder eine Einfachbindung,

$R^0$ Wasserstoff oder $C_1$-$C_7$-Alkyl, und

m eine ganze Zahl 1, 2, 3, 4 oder 5

bedeuten.

Besonders bevorzugt sind erfindungsgemäße Verbindungen enthaltend genau einen aromatischen Ring.

Ferner bevorzugt sind erfindungsgemäße Verbindungen enthaltend keinen aromatischen Ring.

Besonders bevorzugt sind Verbindungen der Formel I enthaltend ausschließlich einen oder mehrere Reste der Gruppe A), insbesondere solche worin m 2, 3 oder 4 ist.

Ferner bevorzugt sind Verbindungen der Formel I enthaltend genau einen Rest der Gruppe B) oder C), insbesondere solche worin m 2, 3 oder 4 ist.

In den erfindungsgemäßen Verbindungen bedeutet ein substituierter Ring vorzugsweise einen durch L ein- oder mehrfach substituierten Ring, wobei L bei jedem Auftreten gleich oder verschieden OH, $CH_2OH$ F, Cl, Br, I,-CN, $-NO_2$ -NCO, -NCS, -OCN, -SCN, $SF_5$, $-C(=O)N(R^0)_2$, $-C(=O)Y^1$, - $C(=O)R^0$, $-N(R^0)_2$, optional substituiertes Silyl, geradkettiges oder verzweigtes Alkyl oder Alkoxy mit 1 bis 25 C-Atomen, oder geradkettiges oder verzweigtes Alkenyl, Alkinyl, Alkylcarbonyl, Alkoxycarbonyl, Alkylcarbonyloxy oder Alkoxycarbonyloxy mit 2 bis 25 C-Atomen, worin in allen diesen Gruppen auch ein oder mehrere H-Atome durch F, Cl oder CN ersetzt sein können, und $Y^1$ Halogen bedeutet.

Besonders bevorzugte Reste der Gruppe A) sind ausgewählt aus der Gruppe bestehend aus Cyclohexan-1,4-diyl, worin auch eine oder mehrere nicht-benachbarte $CH_2$-Gruppen durch O und/oder S ersetzt sein können ("Sechsring-O/S-Heterocyclen"), Cyclohexen-1,4-diyl, Piperidin-1,4-diyl, Bicyclo[1.1.1]pentan-1,3-diyl, Bicyclo[2.2.2]octan-1,4-diyl, Spiro[3.3]heptan-2,6-diyl, Decahydronaphthalin-2,6-diyl und Octahydro-4,7-methano-indan-2,5-diyl, wobei alle diese Reste unsubstituiert oder durch L ein- oder mehrfach substituiert sein können.

Besonders bevorzugte Reste der Gruppe B) sind ausgewählt aus der Gruppe bestehend aus1,4-Phenylen, worin auch eine oder mehrere CH-Gruppen durch N ersetzt sein können ("Sechsring-N-Heteroaromaten"), Pyrrol-2,5-diyl, Furan-2,5-diyl, Thiophen-2,5-diyl, Imidazol-2,5-diyl, 1,3-Oxazol-2,5-diyl, 1,3-Thiazol-2,5-diyl, Pyrazol-3,5-diyl, Isoxazol-3,5-diyl und Isothiazol-3,5-diyl, wobei alle diese Reste unsubstituiert oder durch L ein-oder mehrfach substituiert sein können.

Besonders bevorzugte Reste der Gruppe C) sind 1,2,3,4-Tetrahydronaphthalin-2,6-diyl und Indan-2,5-diyl, welche unsubstituiert oder durch L ein- oder mehrfach substituiert sein können.

Besonders bevorzugte Sechsring-O/S-Heterocyclen sind Tetrahydropyran-2,5-diyl, 1,3-Dioxan-2,5-diyl und 1,3-Dithian-2,5-diyl.

Besonders bevorzugte Sechsring-N-Heteroaromaten sind Pyridin-2,5-diyl, Pyrimidin-2,5-diyl, Pyridazin-3,6-diyl und 1,3,5-Triazin.

Ganz besonders bevorzugt sind Verbindungen der Formel I, worin $A^1$ und $A^2$ jeweils unabhängig voneinander

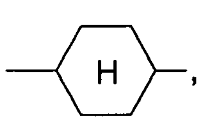 , 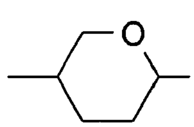 oder 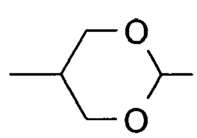 ,

bedeuten, wobei einer der vorhandenen Reste $A^1$ und $A^2$ ggf. auch

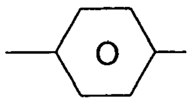 , 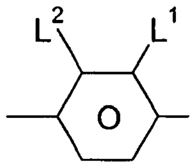 oder 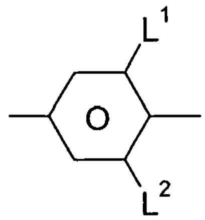

bedeuten kann, worin $L^1$ und $L^2$ jeweils unabhängig voneinander H, F oder Cl bedeuten.

Besonders bevorzugte Verbindungen der Formel I sind ausgewählt aus den folgenden Unterformeln:

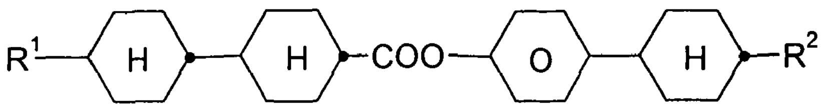 I1

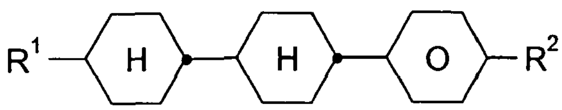 I2

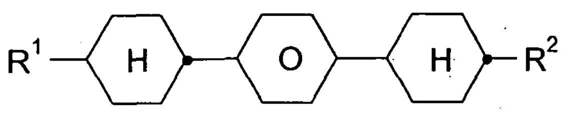 I3

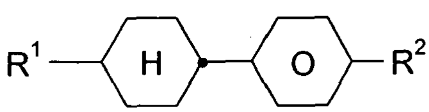 I4

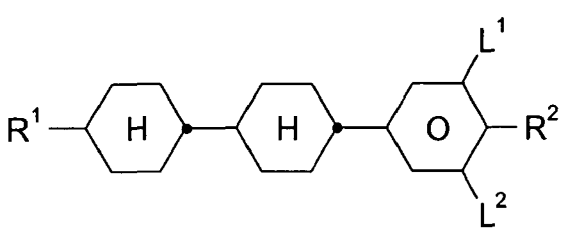 I5

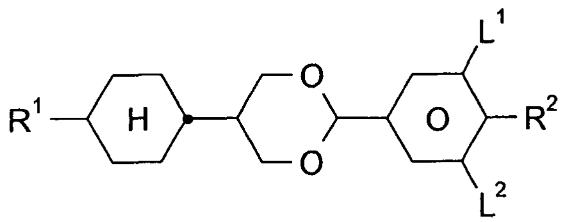

I6

worin $R^1$ und $R^2$ die in Formel I angegebenen Bedeutungen besitzen, und $L^1$ und $L^2$ jeweils unabhängig voneinander H oder F bedeuten.

In den Verbindungen der Formel I und deren Unterformeln bedeuten $R^1$ und $R^2$ jeweils unabhängig voneinander vorzugsweise geradkettiges Alkyl oder Alkoxy mit 1 bis 7 C-Atomen oder geradkettiges Alkenyl mit 2 bis 6 C-Atomen. $R^1$ bedeutet besonders bevorzugt $CH_3$, $C_2H_5$, n-$C_3H_7$, n-$C_4H_9$, n-$C_5H_{11}$ $OCH_3$ oder $OC_2H_5$. $R^2$ bedeutet besonders bevorzugt F, CN, $NH_2$, NCS, $CH_3$, $C_2H_5$, n-$C_3H_7$, n-$C_4H_9$, n-$C_2H_{11}$, $OCH_3$ oder $OC_2H_5$. Bevorzugte Alkenylgruppen sind $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH-und $CH_3$-CH=CH-$(CH_2)_2$-.

Besonders bevorzugt sind Verbindungen der Formel I, insbesondere solche der Formeln I2, I3 und I4, worin einer der Reste $R^1$ und $R^2$, vorzugsweise $R^2$, -C≡C-CN oder -C≡C-$CH_3$ bedeutet.

Ferner bevorzugt sind Verbindungen der Formel I, insbesondere solche der Formel 15, worin einer der Reste $R^1$ und $R^2$, vorzugsweise $R^2$, -NCS bedeutet.

Ferner bevorzugt sind Verbindungen der Formel I, insbesondere solche der Formeln I2, I3 und I4, worin einer der Reste $R^1$ und $R^2$ vorzugsweise $R^1$, eine Alkenylgruppe mit 2 bis 7 C-Atomen bedeutet.

Ferner bevorzugt sind Verbindungen der Formel I und deren Unterformeln, worin $R^1$ für $R^3$-$Z^3$- und/oder $R^2$ für $R^4$-$Z^4$- steht, wobei $R^3$ und $R^4$ jeweils unabhängig voneinander Alkyl oder Alkoxy mit 1 bis 12, vorzugsweise mit 1 bis 7 C-Atomen bedeuten, und $Z^3$ und $Z^4$ jeweils unabhängig voneinander -CO-, -CO-O-, -O-CO-, -CONR$^0$- oder -NR$^0$CO- bedeuten. $Z^3$ und $Z^4$ bedeuten vorzugsweise -CO-O- oder -O-CO-. Weitere bevorzugte Verbindungen der Formel I und deren Unterformeln sind solche, worin $R^1$ für $R^3$-CO-O- und/oder $R^2$ für $R^4$-CO-O- stehen, sowie solche, worin $R^1$ für $R^3$-O-CO- und/oder $R^2$ für $R^4$-O-CO- stehen.

$Z^1$ in Formel I bedeutet vorzugsweise -COO-, -OCO- oder eine Einfachbindung, besonders bevorzugt eine Einfachbindung.

Ganz besonders bevorzugt sind Verbindungen ausgewählt aus den folgenden Unterformeln:

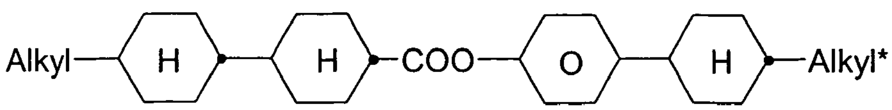

I1a

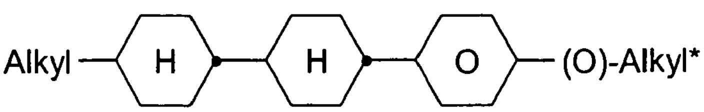

I2a

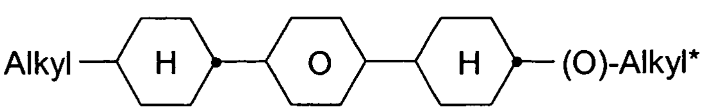

I3a

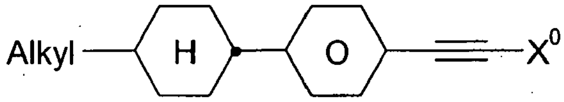

I4a

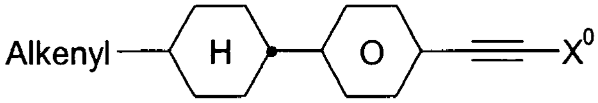

I4b

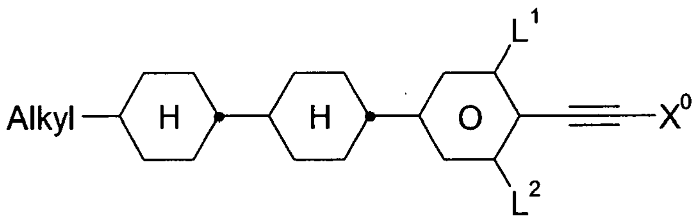

I5a

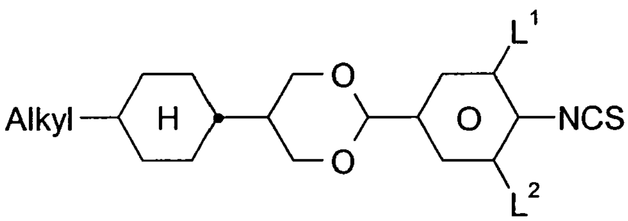

I6a

worin Alkyl und Alkyl* jeweils unabhängig voneinander einen geradkettigen Alkylrest mit 1, 2, 3, 4, 5 oder 6 C-Atomen, Alkenyl einen geradkettigen Alkenylrest mit 2, 3, 4, 5 oder 6 C-Atomen, (O) ein Sauerstoffatom oder eine Einfachbindung, $X^0$ CN oder $CH_3$, und $L^1$ und $L^2$ jeweils unabhängig voneinander H oder F bedeuten. Alkenyl bedeutet vorzugsweise $CH_2$=CH-, $CH_2$=$CHCH_2CH_2$-, $CH_3$-CH=CH-, $CH_3$-$CH_2$-CH=CH-, $CH_3$-$(CH_2)_2$-CH=CH-, $CH_3$-$(CH_2)_3$-CH=CH- oder $CH_3$-CH=CH-$(CH_2)_2$-.

In den oben genannten Unterformeln bedeutet $L^1$ vorzugsweise F, und $L^2$ bedeutet H oder F, vorzugsweise F.

"Beinhalten" oder "umfassen" oder "aufweisen" bedeutet, dass neben den aufgezählten Merkmalen und/ oder Bestandteilen noch weitere Merkmale, Verfahrensschritte und/oder Bestandteile vorhanden sein können, d.h. eine nicht abschließende Aufzählung vorliegt. Im Unterschied hierzu bedeutet "enthalten", dass bei der so charakterisierten Ausführungsform nur die genannten Merkmale, Verfahrensschritte und/oder Bestandteile gegeben sind.

Die Verbindungen der Formel I und deren Unterformeln können nach an sich bekannten Methoden dargestellt werden, wie sie in der Literatur (z.B. in den Standardwerken wie Houben-Weyl, Methoden der Organischen Chemie, Georg-Thieme-Verlag, Stuttgart) beschrieben sind, und zwar unter Reaktionsbedingungen, die für die genannten Umsetzungen bekannt und geeignet sind. Dabei kann man auch von an sich bekannten, hier nicht näher erwähnten Varianten Gebrauch machen.

Weitere geeignete Verfahren zur Herstellung von Verbindungen der Formel I und deren Unterformeln sind in der Literatur beschrieben. Verbindungen der Formeln I1 bis I6 und ihre Herstellung sind zum Beispiel in EP 0 087 102 A1, EP 0 062 470 A1 und DE 32 27 916 A1 beschrieben, oder können in Analogie zu den darin beschriebenen Verfahren hergestellt werden.

Die Verbindungen der Formel I und deren Unterformeln können nach üblichen dem Fachmann geläufigen Verfahren, beispielsweise durch - auch konsekutiv durchführbare - Suzuki-Kreuzkupplung von entsprechenden aromatischen Boronsäuren oder Boronsäureestern mit geeignet substituierten Phenylverbindungen, hergestellt werden. Bevorzugt sind dabei Halogenphenylverbindungen, insbesondere Brom-oder Iodphenylverbindungen.

In einer bevorzugten Ausführungsform der Erfindung enthält die Kompensationsfolie nur eine Verbindung der Formel 1.

In einer weiteren bevorzugten Ausführungsform der Erfindung enthält die Kompensationsfolie zwei, oder mehr als zwei, Verbindungen der Formel I. Besonderes bevorzugte Kompensationsfolien dieses Typs enthalten vorzugsweise 2 bis 15, besonders bevorzugt 2 bis 10, ganz besonders bevorzugt 2, 3, 4 oder 5 Verbindungen der Formel I.

In einer weiteren bevorzugten Ausführungsform der Erfindung wird nur eine (d.h. genau eine) Kompensationsfolie pro Flüssigkristallzelle bzw. Flüssigkristalldisplay eingesetzt.

In einer weiteren bevorzugten Ausführungsform der Erfindung werden zwei, oder mehr als zwei, Kompensationsfolien pro Flüssigkristallzelle bzw. Flüssigkristalldisplay eingesetzt.

Im letzteren Falle wird die erfindungsgemäße Kompensationsfolie vorzugsweise für die Kompensation einer VA-Flüssigkristallanzeige (vertically aligned) eingesetzt, dafür liegt bei zwei verwendeten Kompensationsfolien der Bereich der Retardation für jede der Folien von Ro vorzugsweise bei 30 bis 70, insbesondere bei 40 bis 60 nm, der von Rth vorzugsweise bei -100 bis -160, insbesondere von -120 bis -140 nm, im Falle von nur einer Kompensationsfolie für die VA-Anzeige für Ro vorzugsweise bei 30 bis 90, insbesondere 50 bis 70 nm und der von Rth vorzugsweise bei -160 bis -270 nm, insbesondere von -180 bis -250 nm (bevorzugte Retardationswerte, bevorzugte Retardationsbereiche).

In einer weiteren bevorzugten Ausführungsform zeigt die Kompensationsfolie negative Dispersion der Retardation von Ro, worin $Ro(450)/Ro(550) < 1$ bzw. $|Ro(450)| < |Ro(550)|$, wobei Ro(450) und Ro(550) die Retardation bei einer Wellenlänge von 450nm bzw. 550nm bedeutet.

In einer weiteren bevorzugten Ausführungsform zeigt die Kompensationsfolie positive Dispersion der Retardation von Ro, worin $Ro(450)/Ro(550) > 1$ bzw. $|Ro(450)| > |Ro(550)|$, wobei Ro(450) und Ro(550) die Retardation bei einer Wellenlänge von 450nm bzw. 550nm bedeutet.

Beim erfindungsgemäßen Verfahren zur Herstellung einer Kompensationsfolie für eine Flüssigkristallanzeige wird beispielsweise in einer bevorzugten Ausführungsform wie folgt vorgegangen:

Diese bevorzugte Ausführungsform der Erfindung betrifft ein Verfahren zur Herstellung von optischen Kompensationsfolien der erfindungsgemäßen Art (wie vor- und nachstehen oder in den Ansprüchen definiert), wobei man mindestens eine Verbindung der Formel I dem bei der Herstellung der Kompensationsfolien verwendeten Gemisch im Rahmen eines üblichen Verfahrens zum Herstellen derartiger Folien Zusetzt.

Vorzugsweise werden (in einem Ansatz oder vorzugsweise schrittweise, z.B. unter Verwendung von (beispielsweise unter Rühren oder Dispergieren) vorgefertigten Lösungen von Komponenten, wie dem Celluloseester (Zelluloseacylat), insbesondere CAP- oder vorzugsweise Zelluloseacetat), dem oder den Weichmachern und gegebenenfalls einem oder mehreren Additiven oder deren Vermischung, die Bestandteile der verwendeten Mischung (bei einem Foliengießverfahren in einem Lösungsmittel- oder Lösungsmittelgemisch) zugesetzt, und dann mittels eines üblichen Verfahrens, vorzugsweise des "Solution-Casting-" (= Foliengieß-)Verfahrens, auf einer entsprechenden Foliengieß-Maschine unter kontrolliertem Ausbreiten auf einen geeigneten Untergrund, wie ein Metallband (z.B. aus Stahlfolie), und kontrolliertem Trocknen zu einer Kompensationsfolie gemäß der Erfindung verarbeitet, vorzugsweise nach bekannten Verfahren, wie beispielsweise in der US 2005/0045064 A1 beschrieben, die hier diesbezüglich durch Bezugnahme aufgenommen wird.

Besonders vorteilhaft ist, dass angesichts der guten Löslichkeit der Verbindungen der Formel I in den verwendeten Lösungsmitteln/Lösungsmittelgemischen die Zugabe dieser Verbindungen auch in Form von gegenüber der Endkonzentration eine erhöhte Konzentration davon aufweisenden Konzentraten durchgeführt werden kann - dies ist eine bevorzugte Variante der Herstellung. Beispielsweise kann die Verbindung oder können die Verbindungen der Formel I in einer gegenüber der Endkonzentration um den Faktor 1,05 bis 10, wie 1,3 bis 5, konzentrierten Lösung (die auch weitere Zusätze beinhalten kann) zugesetzt werden, beispielsweise in-line (in die Pumpleitung) unter Verwendung geeigneter Mischer, wie statischer Mischer.

Als Lösungsmittel oder Lösungsmittelgemische kommen vorzugsweise cyclische oder acyclische Ester, Ketone oder Ether mit jeweils 3 bis 12 Kohlenstoffatomen, oder geeignete halogenierte (insbesondere chlorierte) Lösungsmittel in Betracht, wie insbesondere Dichlormethan oder Chloroform, vorzugsweise in einem Gemisch mit einem linearen, verzweigten oder cyclischen Alkohol, insbesondere Methanol, wobei der Alkohol auch fluoriert sein kann. Vorzugsweise wird ein Gemisch aus einem chlorierten Kohlenwasserstoff, wie insbesondere Methylenchlorid, und einem Alkohol, insbesondere Methanol, verwendet. Bei Mischungen von einem der genannten nichtalkoholischen und einem der genannten alkoholischen Lösungsmittel liegt deren Volumenverhältnis vorzugsweise in einem Bereich von 75 zu 25 bis 98 zu 2, beispielsweise bei 90 zu 10 (nichtalkoholisches Lösungsmittel zu alkoholisches Lösungsmittel, v/v).

Vorzugsweise findet anschließend eine Reckung statt, um die Retardation Ro und Rth jeweils gut im bevorzugten Bereich einstellen zu können (und vorzugsweise zugleich die virtuelle Verzerrung zu vermindern). Die Reckung findet dabei monoaxial, ohne oder vorzugsweise mit Halten senkrecht zur Reckungsrichtung, statt, oder vorzugsweise biaxial, um die Verzerrung in allen Richtungen zu vermindern. Die Reckung liegt vorzugsweise im Bereich von 1 bis 100 % (1,01- bis 2-fache Reckung), beispielsweise in einer bevorzugten Ausführungsform der Erfindung im Bereich von 3 bis 40 % (1,03- bis 1,4-fache Reckung), bezogen auf die ursprüngliche Länge bzw. Breite der Kompensationsfolie.

Die biaxiale Reckung kann gleichzeitig oder in getrennten Schritten ausgeführt werden. Die vom Band abgezogene Kompensationsfolie wird beispielsweise erst longitudinal und dann lateral gereckt und danach vollständig getrocknet, oder bei nichtkontinuierlicher Produktion der zunächst vollständig getrockneten und aufgewickelten Folie in einem separaten Arbeitsschritt beispielsweise erst longitudinal und dann lateral oder simultan gereckt.

Die Folie wird bei erhöhten Temperaturen gereckt, wobei die Temperatur vorzugsweise im Bereich der Glasübergangstemperatur des Folienmaterials liegen soll. In bestimmten Fällen, beispielsweise bei teilkristallinen Materialien, kann die Recktemperatur auch bis zu 30°C über der Glasübergangstenperatur des Folienmaterials liegen. Die Folie kann unter trockenen Bedingungen gereckt werden. Zum longitudinalen Recken kann die Folie durch Rollen gereckt werden, beispielsweise, indem die Geschwindigkeit des Abziehens langsamer ist als die des Aufrollens, und ohne oder vorzugsweise mit lateraler Haltung (beispielsweise durch Kluppen). Alternativ kann eine separate Reckung in einer Reckungsmaschine vorgenommen werden.

Um eine gute Kombinierbarkeit mit einem Klebemittel für die Laminierung von Polarisator-Schichten (insbesondere auf PVA-Basis) zu erreichen (vor allem verbesserte Adhäsion), wird die erhaltene Schutzfolie vorzugsweise in einem weiteren Schritt teilweise hydrolysiert, um an der Oberfläche die Hydrophilie zu erhöhen, beispielsweise mittels einer wässrigen Base, wie einem Alkalimetallhydroxid, insbesondere KOH oder NaOH, bei Temperaturen im Bereich von 0 bis 80°C, z.B. bei etwa 50 °C, wobei die Hydrolyse beispielsweise 0,1 bis 10 Minuten, in einer möglichen bevorzugten Variante z.B. 1 bis 3 Minuten, dauern kann. Es folgen ein oder mehrere Waschschritte, z.B. mit Wasser geeigneter Reinheit, und eine Trocknung.

Die Folie kann dann ggfs. nach dem Aufbringen von Klebe- und Schutzschichten und ggf. nach Schneiden in flacher Form oder in aufgerollter Form aufbewahrt werden.

Eine erfindungsgemäße Polarisatorplatte beihaltet zwei transparente Schutzfolien und dazwischen eine Polarisatormembran. Eine erfindungsgemäße optische Kompensationsfolie kann als eine der Schutzfolien verwendet werden, oder auf eine der Schutzfolien aufgebracht werden. Eine herkömmliche Zelluloseacylat-, insbesondere Zellulose-$C_1$-$C_7$-Alkanoat-, insbesondere CAP- oder vorzugsweise Zelluloseacetat-Folie kann als die andere Schutzfolie (oder für beide Schutzfolien) verwendet werden.

Als Polarisationsmembran können beispielsweise iodhaltige Polarisationsmembranen, polyen-basierte Polarisationsmembranen oder dichroitische Farbstoffe beinhaltende Polarisationsmembranen verwendet werden. lodhaltige und die Farbstoffe beinhaltenden Polarisationsmembranen werden für gewöhnlich aus Polyvinylalkohol-Folien hergestellt. Die Transmissionsachse der Polarisatormembran wird im wesentlichen senkrecht zur Reckrichtung der erfindungsgemäßen Folie platziert.

Die langsame Achse der Kompensationsfolie kann im wesentlichen senkrecht oder im wesentlichen parallel zur Transmissionsachse der Polarisatormembran ausgerichtet werden.

Bei der Herstellung der Polarisatorplatte werden die Polarisatormembran und die Schutzfilme (in der Regel) mit einem wässrigen Klebemittel laminiert, wofür die Schutzfilme (von denen ja vorzugsweise direkt einer eine erfindungsgemäße Kompensationsfolie sein kann) vorzugsweise wie oben beschrieben an der Oberfläche verseift werden.

Bei der Herstellung zirkular polarisierender Polarisatorplatten kann eine erfindungsgemäße Kompensationsfolie auch so platziert werden, dass die langsame Achse der Kompensationsfolie im wesentlichen im Winkel von 45 Grad zur Transmissionsachse der Membran ausgerichtet ist (bei "im wesentlichen senkrecht" also abweichend vom rechten Winkel, bei "im wesentlichen parallel" abweichend von 0°).

"Im wesentlichen" bedeutet vorzugsweise, dass ein vorstehend genannter Winkel um 5 Grad, beispielsweise um 4 Grad, insbesondere um 2 Grad, von einem oben genannten Winkel abweichen kann.

Die Dicke einer erfindungsgemäßen Kompensationsfolie liegt vorzugsweise im Bereich von 20 bis 150$\mu$m, insbesondere von 30 bis 100 $\mu$m.

Zur Herstellung einer Flüssigkristallanzeige werden nach üblichen Verfahren zwei wie oben hergestellte Polarisationsplatten mit insgesamt ein oder zwei erfindungsgemäßen Kompensationsfolien zur Herstellung von Flüssigkristallanzeigen des Transmissions- oder des Reflektionstyps verwendet. Die erfindungsgemäße(n) Kompensationsfolie (n) wird oder werden dabei zwischen der Flüssigkristallzelle und einer oder den beiden Polarisatorplatten platziert.

Die Flüssigkristallzellen arbeiten dabei vorzugsweise nach dem VA ("Vertically Aligned", einschließlich MVA = "multidomain VA")-, OCB ("Optically Compensated Bend")- oder TN ("Twisted Nematic", einschließlich STN = "Super Twisted Nematic", DSTN = "Double Layer STN"-Technologie, oder HAN = "Hybrid Aligned Nematic")-Prinzip (das VA-Prinzip wird besonders häufig in grossen TFT-Flüssigkristallanzeigen eingesetzt und ist deshalb besonders bevorzugt), oder auch nach dem IPS-Prinzip ("In Plane Switching" = Feld parallel zur Oberfläche der Anzeige).

Geeignete Anordnungen sind dem Fachmann bekannt, die in der vorliegenden Anmeldung in der Einleitung, in der übrigen Beschreibung oder in den Zeichnungen und Ansprüchen genannten Varianten sind nur exemplarisch zu verstehen und sollen den Umfang der Erfindung nicht beschränken.

Einer Kompensationsfolie gemäß der Erfindung können weitere (beispielsweise bei der Herstellung der Lösung oder der Dispersion der Komponenten zugesetzte) Additive zugesetzt werden oder sein, wie Weichmacher, Dispersionsmittel, Pigmente, Farbstoffe (bevorzugt), , UV-Absorber, Füllstoffe, anorganische Polymere, organische Polymere,

Antischaummittel, Schmiermittel, Antioxidantien (wie gehinderte Phenole, gehinderte Amine, phosphorbasierte Antioxidantien, schwefelbasierte Antioxidantien, Sauerstofffänger oder dergleichen, beispielsweise in einer Menge von 0,1 bis 10 Gew.-%), Säurefänger (z.B. Diglycidylether von Polyglykolen, Metallepoxide, epoxidierte Ether-Kondensationsprodukte, Diglycidylether z.B. von Bisphenol A, epoxidierte ungesättigte Fettsäureester, epoxidierte Pflanzenöle oder dergleichen, beispielsweise in einer Menge von 0,1 bis 10 Gew.-%), Radikalfänger, Mittel zur Erhöhung der elektrischen Leitfähigkeit, Verdickungsmittel, Antibleichmittel, Konservierungsmittel, chemische Stabilisatoren wie sterisch gehinderte Amine (wie 2,2,6,6-Tetraalkylpiperidine) oder Phenole, IR-Absorber, Mittel zur Einstellung des Brechungsindex, gasdurchlässigkeitsvermindernde Agentien, wasserdurchlässigkeitsvermindernde Mittel, antimikrobielle Agentien, Antiblokkiermittel (besonders bevorzugt, auch als Mattierungsmittel bezeichnet), welche beispielsweise eine gute Trennbarkeit aufeinandergelegter Schutzfilme ermöglichen, z.B. (Halb-)Metalloxide, wie Siliciumdioxid, Titandioxid, Aluminiumoxid, Zirconiumoxid, Calciumcarbonat, Kaolin, Talkum, kalziniertes Kalziumsilikat, hydratisiertes Kalziumsilikat, Aluminiumsilikat, Magnesiumsilikat oder Kalziumphosphat, kleine anorganische Partikel basierend auf Phosphorsäuresalzen, Kieselsäuresalzen oder Carbonsäuresalzen, oder kleine vernetzte Polymerpartikel, beispielsweise in einer Menge von 0,001 bis 5 Gew.-%, andere als die bereits genannten Stabilisatoren oder dergleichen, oder Mischungen von zwei oder mehr solcher Additive. Dem Fachmann sind derartige Additive für die Zwecke der Herstellung von Kompensationsfolien für Polarisatoren in Flüssigkristallanzeigen geläufig. Die Gesamtmenge aller verwendeten derartigen weiteren Additive liegt vorzugsweise bei 0,1 bis 25 Gew.-%. Gew.-%-Angaben beziehen sich dabei vorstehend jeweils auf die Masse des Kompensationsfolienmaterials.

Als Weichmacher kommen übliche Weichmacher in Betracht, wie aliphatische Dicarbonsäureester, z.B. Dioctyladipat, Dicyclohexyladipat oder Diphenylsuccinat, Ester und/ oder Carbamate ungesättigter oder gesättigter ali- oder heterocyclischer Di- oder Polycarbonsäuren, wie Di-2-naphthyl-1,4-cyclohexandicarboxylat, Tricyclohexyltricarbamat, Tetra-3-methylphenyltetrahydrofuran-2,3,4,5-tetracarboxylat, Tetrabutyl-1,2,3,4-cyclopentantetracarboxylat, Triphenyl-1,3,5-cyclohexyltricarboxylat, 1,2-Cyclohexandicarbonsäuredüsononylester, Triphenylbenzol-1,3,5-tetracarboxylat, phthalsäurebasierte Weichmacher außer denen der Formal I, wie Diethyl-, Dimethoxyethyl-, Dimethyl-, Dioctyl-, Dibutyl-, di-2-ethylhexyl-oder Dicyclohexylphthalat, Bis(2-propylheptyl)phthalat, Dicyclohexylterephthalat, Methylphthalyl-methylglykolat, Ethylphthalyl-ethylglykolat, Propylphthalyl-propylglykolat, Butylphthalyl-butylglykolat, Glycerinester, wie Glycerintriacetat, zitronensäurebasierte Weichmacher wie Acetyltrimethylcitrat, Acetyltriethylcitrat oder Acetylbutylcitrat, polyetherbasierte Weichmacher, oder vorzugsweise (wegen verbesserter bis insbesondere hin zu synergistischer Wirksamkeit mit den Weichmachern der Formel I, aber auch aus Gründen der Umweltverträglichkeit und der guten Verarbeitbarkeit, phosphorsäureesterbasierte Weichmacher wie Triphenylphosphat (sehr bevorzugt), Trikresylphosphat, Biphenyldiphenylphosphat, Butylenbis(diethylphosphat), Ethylen-bis(diphenylphosphat), Phenylen-bis(dibutylphosphat), Phenylen-bis(diphenylphosphat), Phenylen-bis(dixylenylphosphat), Bisphenol A-diphenylphosphat, Diphenyl-(2-ethylhexyl)-phosphat, Octyldiphenylphosphat oder Triethylphosphat.

Der Gesamtanteil an Weichmacher in einer erfindungsgemäßen Kompensationsfolie liegt, bezogen jeweils auf ihre Masse, vorzugsweise im Bereich von 4 bis 15 Gew.-%, insbesondere im Bereich von 6 bis 13 Gew.-%, beispielsweise bei 8 bis 11 Gew.-%.

UV-Absorber sind aus üblichen UV-Absorbermaterialien ausgewählt, die vorzugsweise im Bereich der UV-A, UV-B und UV-C-Strahlung absorbieren (und vorzugsweise im sichtbaren Bereich oberhalb von 400 nm Wellenlänge der elektromagnetischen Strahlung nicht mehr als 10 % Absorption, vorzugsweise nicht mehr als 0,5 % Absorption, insbesondere nicht mehr als 0.2 % Absorption aufweisen).

Als übliche UV-Absorbermaterialien finden vorzugsweise Tinuvin 326 ® (2-tert-Butyl-6-(5-chloro-benzotriazol-2-yl)-4-methyl-phenol = 2-(5-Chlor(2H)-benzotriazol-2-yl)-4-(methyl)-6-(tert-butyl)phenol = "Bumetrizole") oder Tinuvin 327 ® (2,4-di-tert-Butyl-6-(5-chlorbenzotriazol-2-yl)-phenol), beide von Ciba Specialty Chemicals AG, Basel, Schweiz, Uvinul 3049 ® (2,2-Dihydroxy-4,4-dimethoxybenzophenon; BASF AG, Ludwigshafen, Deutschland), Uvinul D-50 ® (2,2', 4,4'-Tetrahydroxybenzophenon; BASF AG) oder Gemische von zwei oder mehr dieser UV-Schutz-Zusätze, oder insbesondere Tinuvin 326 ® alleine Verwendung.

IR-Absorber können einer Kompensationsfolie beigemischt werden zur Anpassung der Retardationswerte bei bestimmten Wellenlängen, beispielsweise in einer Menge von 0.01 bis 5 Gewichtsprozent, vorzugsweise 0.02 bis 2 Gewichtsprozent, sehr bevorzugt von 0.1 bis 0.5 Gewichtsprozent bezogen auf die Masse der Kompensationsfolie. Beispiele für entsprechende IR-Absorber sind anorganische oder vorzugsweise organische IR-Absorber, wie Cyaninfarbstoffe, Metallchelate, Aluminiumverbindungen, Diimmoniumverbindungen, Chinone, Squariliumverbindungen und Methinverbindungen, insbesondere Materialien aus dem Bereich der photosensitiven Materialien aus der Silberhalid-Photographie. IR-Absorber zeigen vorzugsweise eine Absorption im Bereich von 750 bis 1100 nm, insbesondere von 800 bis 1000 nm.

Bevorzugte Ausführungsformen der Erfindung ergeben sich aus den Ansprüchen und insbesondere den unabhängigen Ansprüchen, weshalb die Ansprüche hier durch Bezugnahme in die Beschreibung aufgenommen werden.

Besonders bevorzugte Ausführungsformen der Erfindung beziehen sich auf optische Kompensationsfolien, welche eine oder mehrere der in den Beispielen genannten Verbindungen der Formel I beinhalten, vorzugsweise mono-

oder insbesondere biaxial gereckte Kompensationsfolien, welche insbesondere die vorstehend als bevorzugt genannten Reckungsverhältnisse aufweisen; wobei die Retardationswerte Ro und Rth vorzugsweise auf die vorstehend als bevorzugt genannten Werte eingestellt sind.

Beschreibung der Zeichnungen:

**Fig. 1** bzw. **Fig. 2** zeigen die Retardationsdispersion, d.h. Ro- bzw. Rth-Werte bei verschiedenen Wellenlängen für eine erfindungsgemäße Kompensationsfolie gemäß Beispiel 1.

**Fig. 3** bzw. **Fig. 4** zeigen die Retardationsdispersion, d.h. Ro- bzw. Rth-Werte bei verschiedenen Wellenlängen für eine Kompensationsfolie gemäß Vergleichbeispiel 1.

**Fig. 5** zeigt die Retardation Ro bzw. Rth von Kompensationsfolien gemäß Beispiel 2 in Abhängigkeit vom Weichmachergehalt.

**Fig. 6** zeigt die Retardation Ro bzw. Rth von gereckten Kompensationsfolien gemäß Beispiel 3 in Abhängigkeit vom Reckfaktor.

Die folgenden Beispiele erläutern die vorliegende Erfindung ohne sie zu begrenzen. Sie zeigen dem Fachmann jedoch bevorzugte Mischungskonzepte mit bevorzugt einzusetzenden Verbindungen und deren jeweiligen Konzentrationen sowie deren Kombinationen miteinander. Außerdem illustrieren die Beispiele, welche Eigenschaften und Eigenschftskombinationen zugänglich sind.

Soweit nicht explizit anders vermerkt, sind in der vorliegenden Anmeldung alle angegebenen Werte für Temperaturen, wie zum Beispiel der Schmelzpunkt T(C,N), der Übergang von der smektischen Phase (S) zur nematischen (N) Phase T(S,N) und der Klärpunkt T(N,I), in Grad Celsius (°C) angegeben. Fp. bedeutet Schmelzpunkt, Kp. Klärpunkt. Ferner bedeiten K = kristalliner Zustand, N = nematische Phase, S = smektische Phase und I = isotrope Phase. Die Angaben zwischen diesen Symbolen stellen die Phasenübergangstemperatur in °C dar. Alle Konzentrationen und %-Werte sind in Gewichtsprozent angegeben und beziehen sich auf die jeweilige Gesamtmischung, enthaltend alle festen oder flüssigkristallinen Komponenten, ohne Lösungsmittel.

Weiterhin werden folgende Abkürzungen verwendet (n, m: jeweils unabhängig voneinander 1, 2, 3, 4, 5 oder 6):

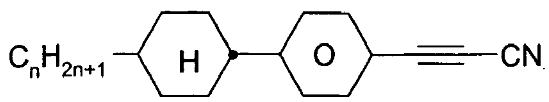

CP-n-AN

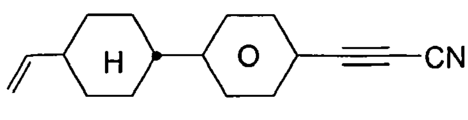

CP-V-AN

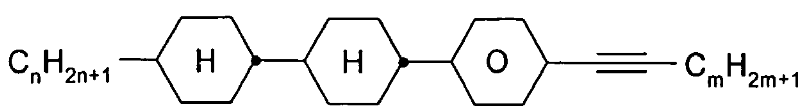

CCP-n-Am

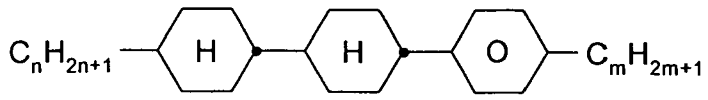

CCP-n-m

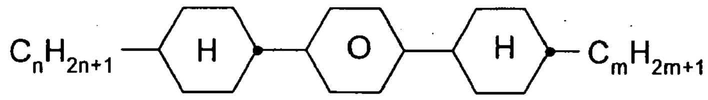

CPC-n-m

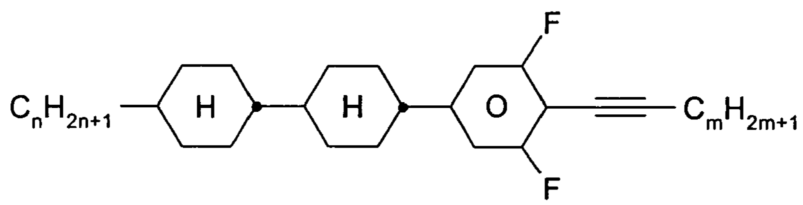

CCU-n-AN

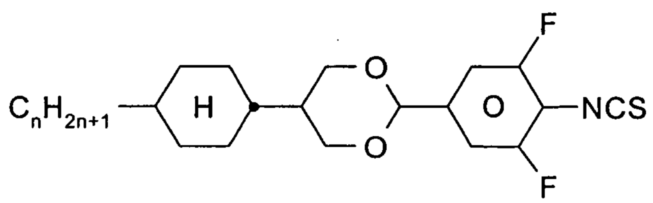

CDU-n-S

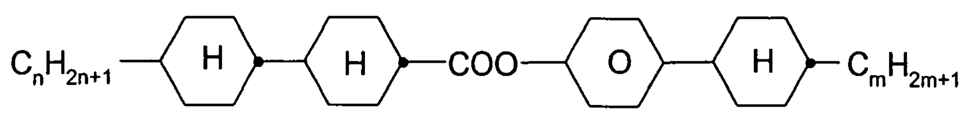

CCPC-nm

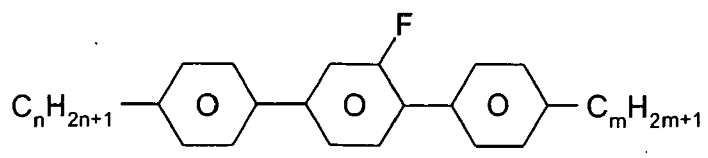

PGP-n-m

Beispiel 1

Erfindungsgemäße Kompensationsfolien enthaltend jeweils eine Verbindung der oben genannten Formeln I1-I6 werden wie folgt hergestellt:

Das Zelluloseacetat (Triacetyl-Zellulose, TAC) und die flüssigkristalline Substanz (z.B. eine Verbindung der Formeln 11 bis I6) werden in eine Glasflasche eingewogen, wobei standardmäßig der Gehalt der erfindungsgemäßen flüssigkristallinen Substanz 2,5% der Gesamtfeststoffmenge beträgt. Dieses Gemisch wird unter ständigem Rühren in Dichlormethan gelöst. Nachdem die Materialien vollständig gelöst sind, wird die Lösung kurzzeitig auf ca 40 Grad Celsius erhitzt und wieder abkühlen gelassen. Die Lösung sollte nun keine Luftblasen enthalten und kann mit einem Filmziehrahmen auf eine Glasplatte gezogen werden. Die Dicke des Nassfilmes beträgt ca. 1000 μm (je nach TAC Konzentration und der zu erreichenden TAC Filmdicke). Das Lösungsmittel verdampft und der TAC-Film kann von der Glasplatte abgehoben werden. Es folgt eine Trocknung im Trockenschrank bei 80°C, um noch evtl. vorhandenes Restlösungsmittel aus dem Film zu entfernen.

Der Film wird über Nacht bei Raumtemperatur gelagert und dann optisch vermessen (Bestimmung des Rth-Wertes). Ein Abschnitt des Filmes wird in einem Klimaschrank bei 60°C und 95 % relativer Luftfeuchte (rF) gelagert und in Zeitintervallen (bis max 1000 Stunden) hinsichtlich einer Trübung begutachtet. Für die Bestimmung des Ro-Wertes wird ein Filmabschnitt in einer Handreckapparatur uniaxial gereckt (bis max. 1,4 fache Reckung).

Die Retardation Rth sowie die Lagerstabilität der einzelnen, ungereckten Kompensationsfolien sind nachfolgend in Tabelle 1 zusammengefasst (TAC Filmdicke ~ 80 μm, Ro =0 nm für die ungereckten Filme).

Tabelle 1

| Substanz | Konzentration im TAC Film | Rth (λ = 550 nm) | Lagerstabilität bei 60°C / 95% rF |
|---|---|---|---|
| CCPC-33 | 2.5% | -160 nm | > 1000 h |
| CCPC-35 | 2.5% | -163 nm | > 1000 h |
| CCP-3-A1 | 2.5% | -171 nm | > 1000 h |
| CPC-2-3 | 2.5% | -118 nm | 600 h |
| CPC-2-5 | 2.5% | -125 nm | 600 h |
| CP-V-AN | 2.5% | -130 nm | > 1000 h |
| CP-4-AN | 2.5% | -128 nm | nach 72 h leichte Trübung |
| CDU-3-S | 2.5% | -129 nm | nach 260 h leichte Trübung |
| CCU-3-AN | 2.5% | -149 nm | nach 100 h Trübung |

Die optische Dispersion (Ro bzw. Rth bei verschiedenen Wellenlängen) einer gereckten Kompensationsfolie enthaltend die Verbindung CCPC-33 ist in **Fig. 1** bzw. **Fig. 2** dargestellt. Die Kompensationsfolie zeigt eine negative Dispersion von Ro und Rth, d.h. eine Zunahme der Absolutwerte von Ro und Rth mit zunehmender Wellenlänge.

Vergleichsbeispiel 1

Zu Vergleichszwecken wird eine Kompensationsfolie hergestellt wie in Beispiel 1 beschrieben, wobei jedoch eine Verbindung mit drei aromatischen Ringen der folgenden Formel verwendet wird:

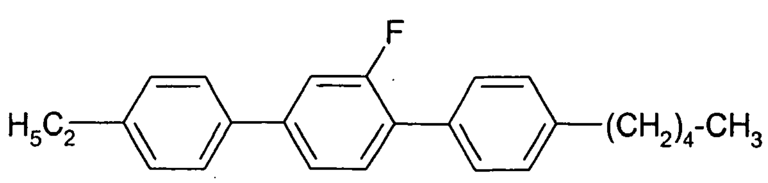

(PGP-2-5)

Die Retardation sowie die Lagerstabilität der Kompensationsfolie sind in Tabelle 2 zusammengefasst (TAC Filmdicke ~ 80 μm):

Tabelle 2

| Substanz | Konzentration im TAC Film | Rth | Lagerstabilität bei 60°C / 95% rF |
|---|---|---|---|
| PGP-2-5 | 2.5% | -167 nm | > 1000 h |

Die optische Dispersion (Ro bzw. Rth bei verschiedenen Wellenlängen) einer gereckten Kompensationsfolie mit PGP-2-5 ist in **Fig.3** und **Fig.4** dargestellt. Die Kompensationsfolie zeigt positive Dispersion, d.h. eine Abnahme der Absolutwerte von Ro bzw. Rth mit zunehmender Wellenlänge.

Wie aus Beispiel 1 und Vergleichsbeispiel 1 ersichtlich ist, kann bei Verwendung von erfindungsgemäßen flüssigkristallinen Substanzen (wie zum Beispiel CCPC-33) die Retardationsdispersion der Kompensationsfolie so beeinflusst werden, dass sich die Dispersion von Ro bzw. Rth genau umgekehrt verhält zu einer Kompensationsfolie mit der flüssigkristallinen Substanz PGP-2-5. Dadurch kann die Dispersion der Kompensationsfolie besser an die Dispersion des Flüssigkristalldisplays angepasst und das Kontrastverhalten und die Farbdarstellung (speziell unter höheren Betrachtungswinkeln) verbessert werden.

Diese Anpassung kann gegebenenfalls durch Verwendung einer Mischung von zwei oder mehr Verbindungen der Formel I mit verschieden starker Ausprägung der Retardationsdispersion verbessert werden, d.h. die R(450)/R(550) Werte der Retardationsfolie nach dem Recken können dadurch genau eingestellt werden.

Beispiel 2

Angesetzt wird in einer 500 ml Glasflasche 16 Gew.-% Lösung von Triacetylcellulose (TAC) (Eastman Che., Kingsport, USA, offizielle Bezeichnung Cellulosetriacetate VM 149), Acetylierungsgrad 60,8 %) und Triphenylphospat (TPP) als Weichmacher (Konzentrationen siehe Tabelle 3) in Methylenchlorid/Methanol 97/3 (w/w). Dazu wird jeweils eine Verbindung der Formel I in einer Konzentration 2,5 % bezogen auf die Feststoffe (TAC + TPP) gegeben und das Ganzes über Nacht im Rollschrank gelöst. Diese Lösungen werden im Wasserbad bei 50 °C entlüftet, danach jeweils Rakelfilme hergestellt und diese über Nacht bei 80°C getrocknet.

Als erfindungsgemäß zuzusetzende Verbindung der Formel I wird die Verbindungen CCPC-34 verwendet. Die Retardationswerte Rth und Ro sowie die Trübung der Folie vor dem Recken sind in Tabelle 3 für Folien aus TAC, enthaltend CCPC 34 (2,5 Gew.%) und verschiedene Gehalte des Weichmachers TPP (Gew.%), dargestellt:

Tabelle 3

| Foliendicke (μm) | % TPP | % Trübung | Rth (λ = 632 nm) | Ro | Rth korrigiert auf 80 μm |
|---|---|---|---|---|---|
| 78 | 0 | 0,6 | -152 | 0,6 | -156 |
| 77 | 4 | 0,4 | -143 | 0,9 | -148 |
| 84 | 8 | 0,7 | -142 | 0,4 | -137 |
| 72 | 10 | 0,5 | -125 | 0,7 | -138 |

Die so hergestellten Folien zeigten keine nennenswerte Trübung, was auf sehr gute Verträglichkeit von Additiv und Matrix hinweist. Hier zeigt sich außerdem die Abhängigkeit der Retardationswerte Rth vom Weichmachergehalt.

**Fig. 5** zeigt die Retardationswerte Ro (■), Rth (◇) und Rth korrigiert auf 80 μm (Δ) der ungereckten Folien aus Tabelle 3 in Abhängigkeit von der Konzentration des Weichmachers TPP.

Beispiel 3

Die Folien aus Beispiel 2 mit einem Weichmachergehalt von 4, 8 bzw. 10% werden uniaxial bzw. biaxial gereckt wie nachfolgend beschrieben.

Generelle Maschinenbeschreibung und Durchführung des Reckens

Die Laborreckmaschine (Karo 4, Fa Brückner, Siegsdorf, Deutschland) besteht aus einem Modul für die Probenbeschickung in das die Folie bei Umgebungsbedingungen eingelegt, mit je 4 Kluppen an allen 4 Seiten befestigt und die ganze Vorrichtung anschließend in ein Ofen modul für das Vorheizen gefahren wird. Nach dem Vorheizen fährt die Probe zurück in den Probenbeschickungsraum und wird gereckt. Nach dem Abkühlen der Vorrichtung können die Kluppen gelöst und die Probe entfernt werden.

Während des Reckvorgangs können die mechanische Ausdehnung sowie die Spannung kontinuierlich gemessen werden, was im Vergleich verschiedener Materialien Rückschlüsse auf eine Auslegung einer Produktionsanlage erlaubt (Daten nicht gezeigt).

a) Reckvorgang:

Verschiedene Einstellungen des Reckvorgangs sind möglich:

- Wechsel der Reckgeschwindigkeit
- Verschiedene Recktemperaturen
- Nacheinander und gleichzeitig Recken bei biaxialem Verfahren

Die geeigneten Einstellparameter für die vorliegende Erfindung sind:

- Vorheizen 1 Minute bei 160 ˚C
- Recken bei 160 ˚C
- Kluppentemperatur 130 ˚C
- Abkühlzeit auf ca. Raumtemperatur 20 sec ("Einfrieren")
- Reckgeschwindigkeit 1 % pro sec (bei asymmetrisch biaxial 1 % pro sec und 4 % pro sec)
- Reckmodus: monoaxial mit Einschrumpf (= neck-in), monoaxial mit fixierter Dimension senkrecht zur Reckrichtung, biaxial symmetrisch (Faktor MD anders als in TD) , biaxial unsymmetrisch (Faktor MD = Faktor TD).
- Reckgrade 1,0 bis 1,2 in Gießrichtung (Längsrichtung, Maschinenrichtung; MD) oder in transversaler Richtung (TD) bei monoxialem Recken.
- Reckgrade 1,0 bis 1.2 in TD und 1,0 bis 1,2 in verschiedenen Kombinationen bei biaxialem Recken.

Wenn nicht anders vermerkt, wird das Muster simultan mit langsamer Geschwindigkeit von 1% pro sec gereckt.

b) Beurteilung des Ergebnisses:

Zunächst wird die Integrität der Probe nach dem Abkühlen und dem Lösen aus den Kluppen visuell beurteilt. Proben-Anfangsgröße 70 x 70 mm, kann nach dem Recken z.B. auf ca. 85 x 85 mm aufgeweitet werden. Die brauchbare Fläche der Muster ist ca. 60 x 60 mm je nach Reckbedingungen, weil der Randbereich durch die Einwirkung der Kluppen verloren geht. Danach wird die Probe zwischen zwei gekreuzte Polarisatoren gelegt und die sich ergebende Polarisations-Farbe beurteilt. Falls die Polarisations-Farbe um den Mittelpunkt der Folie herum gleichmäßig ist, können die Messwerte an dieser Stelle ermittelt werden.

Die Retardationswerte Rth und Ro der Folien nach dem Recken mit verschiedenen Reckfaktoren sind in Tabelle 4 dargestellt. Darin bedeutet % p = Weichmachergehalt, u = uniaxial, bi = biaxial.

Tabelle 4

| **CCPC 34 2.5%** | uniaxial | | | | | |
|---|---|---|---|---|---|---|
| Reckfaktor uniaxial | Rth (u) (4% p) | Ro (u) (4% p) | Rth (u) (8% p) | Ro (u) (8% p) | Rth (u) (10% p) | Ro (u) (10% p) |
| ungereckt | -143 | 0 | -140 | 1 | -125 | 1 |
| uniaxial 1.2 x | -114 | 67 | -118 | 57 | -92 | 36 |
| | | | | | | |
| **CCPC 34 2.5%** | biaxial | | | | | |
| Reckfaktor uniaxial | Rth (bi) (4% p) | Ro (bi) (4% p) | Rth (bi) (8% p) | Ro (bi) (8% p) | Rth (bi) (10% p) | Ro (bi) (10% p) |
| ungereckt | -149 | 1 | -145 | 0 | -125 | 1 |
| biaxial 1.2x1.05 | -138 | 37 | -119 | 29 | -89 | 15 |

Durchgeführt wurde mono-axiales (1:1,20) und asymmetrisch-biaxiales Recken (1,05:1,20). Die Bezeichnung "mono" bedeutet hier, dass nicht seitlich gehalten wurde im Falle der mono-axialen Reckung, d.h. "neck-in" findet statt (Reckfaktor 1,2).

**Fig. 6** zeigt die Retardationswerte Rth (obere Linien) und Ro (untere Linien) der uniaxial gereckten Folien aus Tabelle 4 in Abhängigkeit vom Reckfaktor für eine Weichmacherkonzentration von 4% (♦), 8% (○) und 10% (Δ).

Beispiel 4

Angesetzt wird eine 16 Gew.-% Lösung von Triacetylcellulose (TAC) (Eastman, Kingsport, USA, offizielle Bezeichnung Celluloseacetate VM 149, Acetylgehalt 43,4 bis 43,8 % (w:w)), sowie Triphenylphosphat (TPP) und teilweise zusätzlich Ethylphthalylethylglocolat (EPEG) als Weichmacher in Methylenchlorid /Methanol 97/3 (w/w) Der Feststoffgehalt wurde jeweils auf 16 % eingestellt. Rezepturen A enthalten 8 % (w:w) TPP, Rezepturen B 8% TPP und 2 % EPEG (w:w) bezogen auf Feststoffe. Diese wird über Nacht im Rollschrank gelöst. Dieser Lack wird dann portioniert und jeweils Additiv 1 in den Konzentrationen 2,5 %, 4 oder 5 % bezogen auf die Feststoffe (TAC + Weichmacher) und weiterhin Lösemittel (um wieder 16%igen Lösung zu erhalten) zugegeben. Diese Mischung wird nochmals über Nacht im Rollschrank gelöst. Diese Lacke werden im Wasserbad entlüftet und jeweils Folien bei Raumtemperatur auf Glasplatten gezogen. Der Gießspalt wurde dabei je nach gewünschter Foliendicke auf 390 μm bis 650 μm eingestellt. Ablüften der gezogenen Filme bei Raumtemperatur ca. 5 Minuten. Trocknung der Glasplatten mit den Filmen ca 18 h bei 80 ˚C im Umlufttrockenschrank.

Das erfindungsgemäß zuzusetzende flüssigkristalline Additiv (Additiv 1) besteht aus einem Gemisch von 75% einer Komponente der Substanzklasse CCPC-nm und 25 % einer Komponente der Substanzklasse CCP-n-Am.

Die Zusammensetzung der Folien ist in Tabelle 5 gezeigt.

Tabelle 5

| Muster | Additiv 1 (% bez. auf Feststoff) | TPP (% bez. auf Feststoff) | EPEG (% bez. auf Feststoff) | TAC (% bez. auf Feststoff) | Additiv 1 (% bez. auf TAC) |
|---|---|---|---|---|---|
| A1 | 5 | 8 | - | 87 | 5,43 |
| A2 | 2,5 | 8 | - | 90,5 | 2,69 |
| B1 | 5 | 8 | 2 | 85 | 5,56 |
| B2 | 4 | 8 | 2 | 86 | 4,44 |

Dicke, Trübung und Retardation werden nach dem Trocknen und Abziehen der Folien bei Raumtemperatur gemessen, wie oben beschrieben. Die optischen Eigenschaften der Folien vor der Reckung sind in Tabelle 6 zusammengefasst.

Tabelle 6

| Muster | Dicke (μm) | Ro (nm) | Rth (nm) |
|---|---|---|---|
| A1 | 74 | 1 | -214 |
| A2 | 82 | 1 | -129 |
| B1 | 46 | 1 | -125 |
| B2 | 53 | 1 | -118 |

Beispiel 5

Retardationswerte und Wellenlängendispersion nach Recken bei verschiedenen Reckfaktoren für Folien

Die in Beispiel 4 hergestellten und charakterisierten Folien werden in einer Laborreckanlage KARO 4 (Fa. Brückner, Sigsdorf, Deutschland) gereckt. Nach der Reckung mit verschiedenen Reckgraden und Temperaturen werden die Ro- und Rth-Werte in Abhängigkeit der Wellenlänge mit einem AxoScan Polarimeter (Axometrics) ermittelt. Die Ergebnisse sind in Tabelle 7 zusammengefasst.

Ro [450nm], Ro [550nm] und Ro [650nm] entsprechen jeweils den "in plane" Retardationen gemessen bei den Wellenlängen von 450, 550 und 650 nm, gleiches gilt für die wellenlängenabhängigen Rth ("out of plane") Werte.

Tabelle 7

| | A1 | A2 | B1 | B2 |
|---|---|---|---|---|
| Recktemperatur. (˚C) | 160 | 160 | 170 | 170 |
| Reckgrad (MD x TD)* | 1,05x1,2 | 1,1x1,2 | 1,1 (nur MD) | 1,1x1,2 |
| Dicke (μm) | 62 | 65 | 40 | 45 |
| Ro [550nm] (nm) | 160 | 69 | 111 | 71 |
| Rth [550nm] (nm) | -216 | -141 | -162 | -128 |
| Ro [450nm] / Ro [550nm] | 1,031 | 1,014 | 1,036 | 1,028 |
| Ro [650nm] / Ro [550nm] | 0,981 | 0,986 | 0,982 | 0,986 |
| Rth [450nm] / Rth [550nm] | 0,986 | 0,943 | 0,981 | 0,969 |
| Rth [650nm] / Rth [550nm] | 1,014 | 1,035 | 1,006 | 1,008 |
| *: MD = Reckung in Gießrichtung Gießrichtung (machine direction), TD = Reckung in der Folienebenesenkrecht zur Gießrichtung (transverse direction). | | | | |

**Patentansprüche**

1. Optische Kompensationsfolie auf Zelluloseacylat-Basis für Flüssigkristallanzeigen, **dadurch gekennzeichnet, dass** sie eine oder mehrere Verbindungen mit zwei oder mehr Ringen aufweist, wobei höchstens einer dieser Ringe ein aromatischer Ring ist.

2. Optische Kompensationsfolie nach Anspruch 1, **dadurch gekennzeichnet, dass** der Gewichtsanteil besagter Verbindungen mit zwei oder mehr Ringen von 0,5 bis 10 Gewichtsprozent, bezogen auf das Gesamtgewicht der Kompensationsfolie, beträgt.

3. Optische Kompensationsfolie nach Anspruch 1 oder 2, **dadurch gekennzeichnet, dass** sie eine Dicke von 20 bis 15 0μm, insbesondere von 30 bis 100 μm hat.

4. Optische Kompensationsfolie nach einem oder mehreren der Ansprüche 1 bis 3, **dadurch gekennzeichnet, dass** sie einen Retardationswert Ro von 30 bis 70 nm und einen Retardationswert Rth von -100 bis -160 nm hat, wobei Ro für den Retardationswert in der Richtung der Ebene und Rth für den Retardationswert in der Richtung der Dicke der optischen Kompensationsfolie steht.

5. Optische Kompensationsfolie nach einem oder mehreren der Ansprüche 1 bis 3, **dadurch gekennzeichnet, dass** sie einen Retardationswert Ro von 30 bis 90 nm und einen Retardationswert Rth von -160 bis -270 nm hat.

6. Optische Kompensationsfolie nach einem oder mehreren der Ansprüche 1 bis 5, **dadurch gekennzeichnet, dass** es sich bei dem als Basis dienenden Zelluloseacylat um ein Celluloseacetopropionat (CAP) und/oder um ein Zelluloseacetat handelt.

7. Optische Kompensationsfolie nach einem oder mehreren der Ansprüche 1 bis 6, **dadurch gekennzeichet, dass** die Verbindungen mit zwei oder mehr Ringen aus Formel I ausgewählt sind:

$$R^1\text{-}A^1\text{-}(Z^1\text{-}A^2)_m\text{-}R^2 \qquad \text{I}$$

worin

$R^1$ und $R^2$ jeweils unabhängig voneinander F, Cl, Br; I, OH, -CN, = $NO_2$ -NCO, -NCS, -OCN, -SCN, $-NH_2$, $-SF_5$,

geradkettiges oder verzweigtes Alkyl oder Alkoxy mit 1 bis 12 C-Atomen, worin auch eine oder mehrere $CH_2$-Gruppen durch -O-, -S-, -CO-, -CO-O-, -O-CO-, -O-CO-O-, -CH=CH-, -C≡C-, $-NR^0-$, $-CO-NR^0-$, $-NR^0-CO-$ so ersetzt sein können, dass O- und/oder S-Atome nicht direkt miteinander verknüpft sind, und worin auch ein oder mehrere H-Atome durch F, Cl oder CN ersetzt sein können,

$A^1$ und $A^2$ jeweils unabhängig voneinander einen Rest ausgewählt aus der Gruppe A) bestehend aus nichtaromatischen, mono-oder polycyclischen, carbo- oder heterocyclischen Ringen mit 5 bis 10, vorzugsweise 5, 6, 7 oder 8 Ringatomen, wobei auch zwei oder mehr als zwei dieser Ringe einen kondensierten Rest bilden können, und wobei die einzelnen Ringe auch ein- oder mehrfach substituiert sein können, und/oder

der Gruppe B) bestehend aus aromatischen oder heteroaromatischen Ringen mit 5 bis 10, vorzugsweise 5 oder 6 Ringatomen, welche auch ein- oder mehrfach substituiert sein können, und/oder der Gruppe C) bestehend aus kondensierten Resten bestehend aus einem oder mehreren Ringen der Gruppe A) und genau einem Ring der Gruppe B), wobei die einzelnen Ringe auch ein- oder mehrfach substituiert sein können,

wobei höchstens einer der vorhandenen Reste $A^1$ und $A^2$ aus der Gruppe B) oder C) ausgewählt ist,

$Z^1$ bei jedem Auftreten gleich oder verschieden -COO-, -OCO-, $-CH_2O-$, $-OCH_2-$, $-CH_2S-$, -SCH2-, $-CF_2O-$ $-OCF_2-$, $-CH_2CH_2-$, $-CH_2CF_2-$, $-CF_2CH_2-$, $-C_2F_4-$, -CH=CH-, -CH=CF-, -CF=CH-, -CF=CF-, -C≡C- oder eine Einfachbindung,

$R^0$ Wasserstoff oder $C_1$-$C_7$Alkyl, und

m eine ganze Zahl 1, 2, 3 oder 4

bedeuten.

**8.** Optische Kompensationsfolie nach Anspruch 7, **dadurch gekennzeichet, dass** in Formel $A^1$ und $A^2$ jeweils unabhängig voneinander

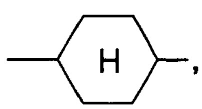 , 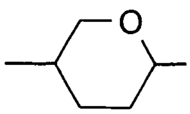 oder 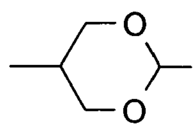 ,

einer der vorhandenen Reste $A^1$ und $A^2$ ggf. auch

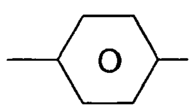 , 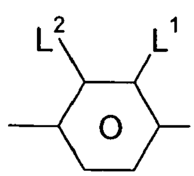 oder 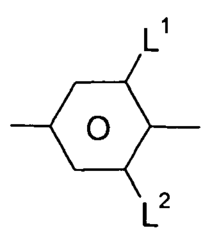

bedeuten, worin $L^1$ und $L^2$ jeweils unabhängig voneinander H, F oder Cl bedeuten.

**9.** Optische Kompensationsfolie nach Anspruch 7 oder 8, **dadurch gekennzeichet, dass** die Verbindungen der Formel I aus folgenden Unterformeln ausgewählt sind:

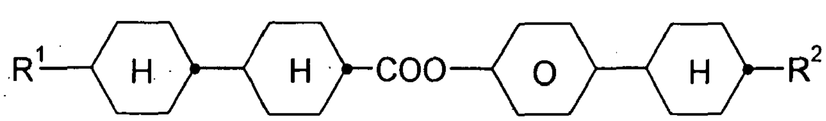 I1

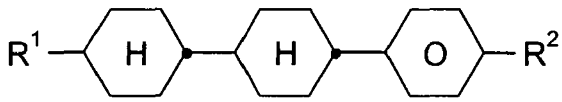

I2

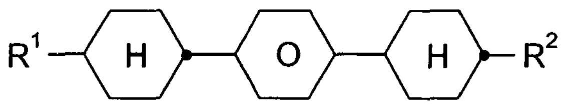

I3

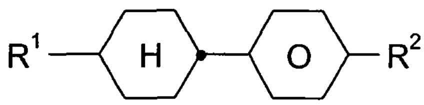

I4

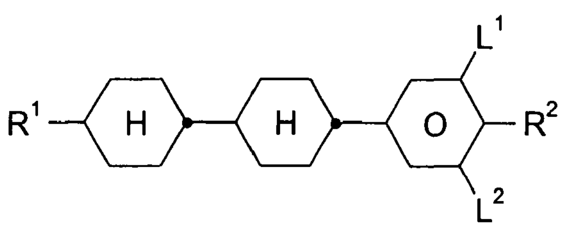

I5

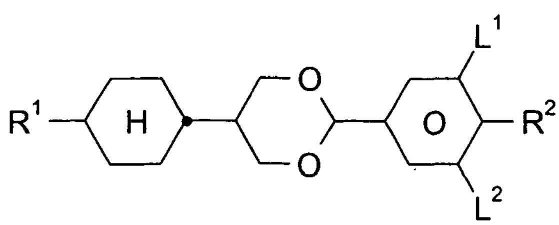

I6

worin $R^1$ und $R^2$ die in Anspruch 8 angegebenen Bedeutungen besitzen, und $L^1$ und $L^2$ jeweils unabhängig voneinander H oder F bedeuten.

**10.** Optische Kompensationsfolie nach einem oder mehreren der Ansprüche 7 bis 9, **dadurch gekennzeichet, dass** $R^2$ -C≡C-CN, -C≡C-$CH_3$ oder -NCS bedeutet.

**11.** Optische Kompensationsfolie nach einem oder mehreren der Ansprüche 7 bis 9, **dadurch gekennzeichet, dass** $R^1$ eine Alkenylgruppe mit 2 bis 7 C-Atomen bedeutet.

**12.** Verwendung einer oder mehrerer der in einem oder mehreren der Ansprüche 1 und 7 bis 11 genannten Verbindungen zur Herstellung einer optischen Kompensationsfolie nach einem der Ansprüche 1 bis 11, **dadurch gekennzeichnet, dass** man die mindestens eine dieser Verbindungen während der Herstellung der optischen Kompensationsfolie dieser zusetzt.

**13.** Polarisatorplatte, welche eine optische Kompensationsfolie nach einem oder mehreren der Ansprüche 1 bis 11

aufweist.

**14.** Flüssigkristallanzeige, welche mindestens eine optische Kompensationsfolie nach einem oder mehreren der Ansprüche 1 bis 11 aufweist.

**15.** Flüssigkristallanzeige nach Anspruch 14, **dadurch gekennzeichnet, dass** sie genau eine optische Kompensationsfolie nach einem der Ansprüche 1 bis 11 aufweist.

**16.** Flüssigkristallanzeige, **dadurch gekennzeichnet, dass** sie zwei oder mehr optische Kompensationsfolien nach einem oder mehreren der Ansprüche 1 bis 11 aufweist.

**17.** Flüssigkristallanzeige nach einem oder mehreren der Ansprüche 14 bis 16, **dadurch gekennzeichnet, dass** sie eine VA-Anzeige ist.

**18.** Verfahren zur Herstellung einer optischen Kompensationsfolie nach einem oder mehreren der Ansprüche 1 bis 11, **dadurch gekennzeichnet, dass** man eine oder mehrere der besagten Verbindungen mit zwei oder mehr Ringen dem bei der Herstellung der Kompensationsfolien verwendeten Gemisch im Rahmen des Verfahrens zum Herstellen derartiger Folien zusetzt.

**19.** Verfahren nach Anspruch 18, **dadurch gekennzeichnet, dass** es sich um ein Foliengieß-Verfahren handelt.

**20.** Verfahren nach Anspruch 18 oder 19, **dadurch gekennzeichnet, dass** eine Reckung der nach dem Gießen und Trocknen erhältlichen Folie durchgeführt wird, wobei die Reckung monoaxial, ohne oder mit Halten senkrecht zur Reckungsrichtung, oder biaxial sein kann.

**21.** Verfahren zur Herstellung einer Polarisatorplatte, **dadurch gekennzeichnet, dass** eine optische Kompensationsfolie nach einem oder mehreren der Ansprüche 1 bis 11 auf die Polarisatormembran oder auf eine Schutzschicht einer Polarisatormembran aufgebracht, insbesondere auflaminiert, wird.

**22.** Verfahren zur Herstellung eines Flüssigkristallanzeige, **dadurch gekennzeichnet, dass** mindestens eine Polarisatorplatte verwendet wird, auf die eine optische Kompensationsfolie nach einem oder mehreren der Ansprüche 1 bis 11 aufgebracht, insbesondere auflaminiert ist.

**23.** Verfahren nach Anspruch 22, **dadurch gekennzeichnet, dass** genau eine optische Kompensationsfolie nach einem oder mehreren der Ansprüche 1 bis 11 bei der Herstellung der Flüssigkristallanzeige verwendet wird.

**24.** Verfahren nach Anspruch 22, **dadurch gekennzeichnet, dass** zwei oder mehr optische Kompensationsfolien nach einem oder mehreren der Ansprüche 1 bis 11 zur Herstellung der Flüssigkristallanzeige verwendet werden.

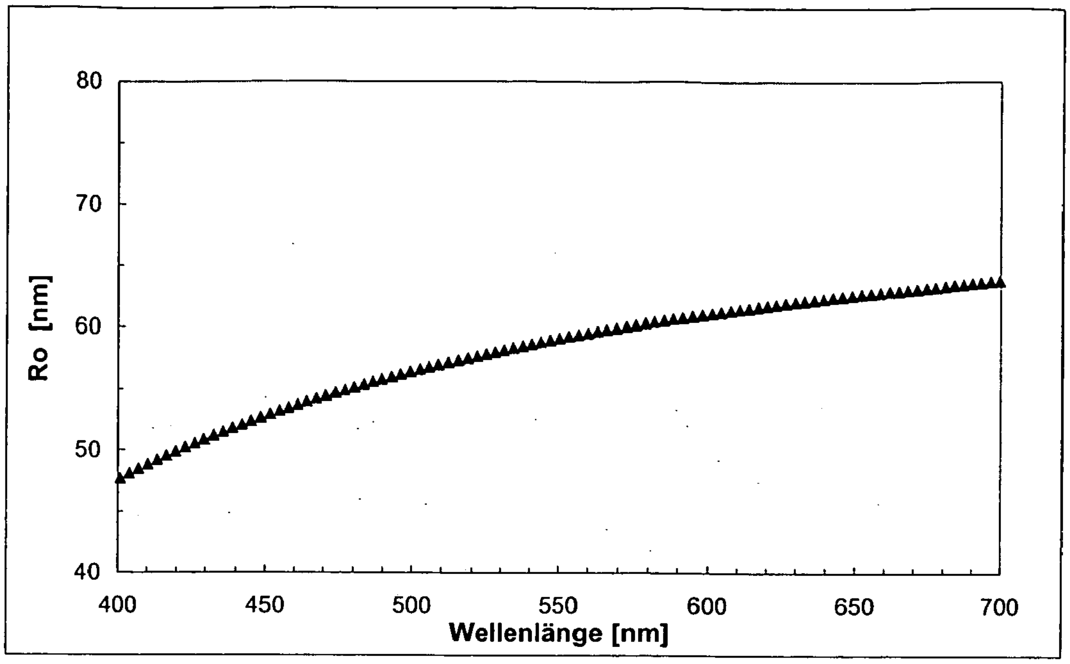
80
70
60
50
40
Ro [nm]
400
450
500
550
600
650
700
Wellenlänge [nm]

Fig. 1

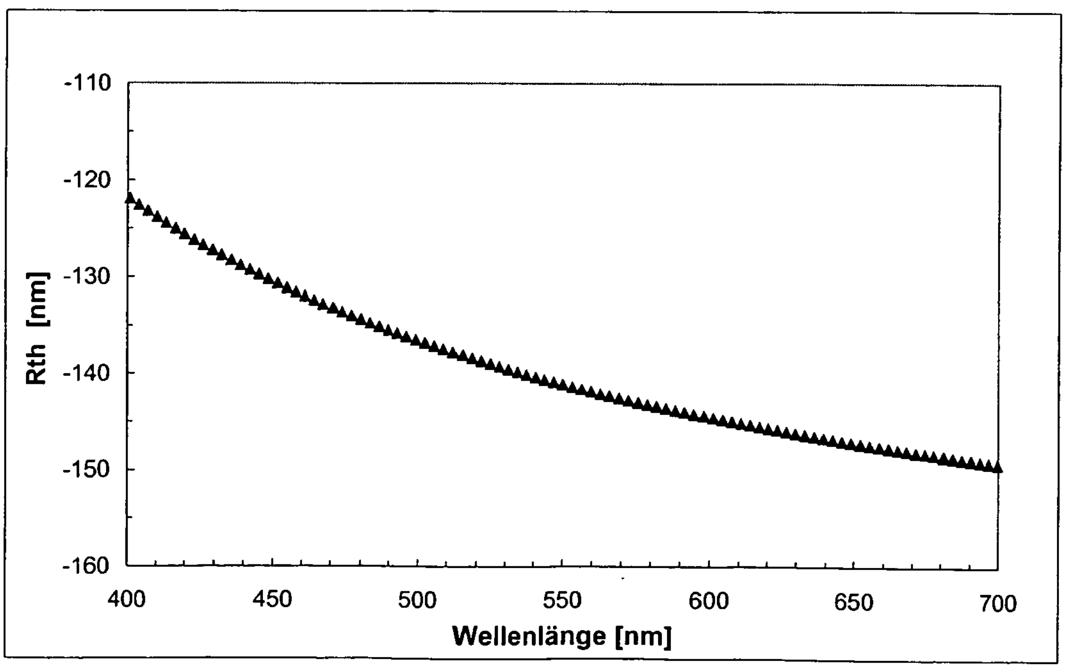
-110
-120
-130
-140
-150
-160
Rth [nm]
400
450
500
550
600
650
700
Wellenlänge [nm]

Fig. 2

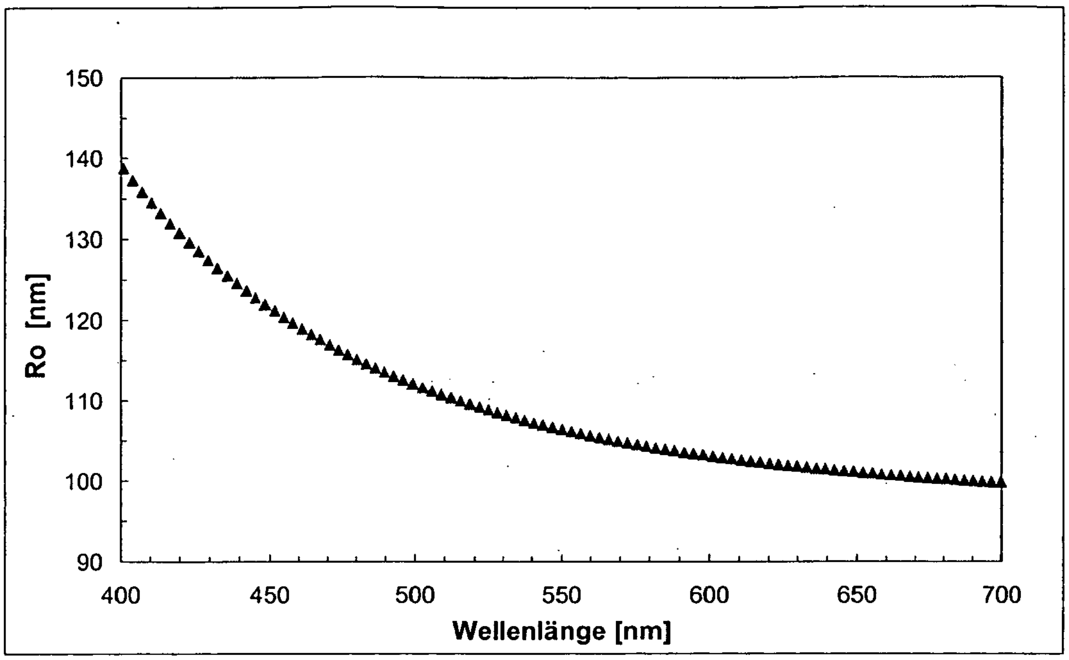
150
140
130
120
110
100
90
Ro [nm]
400
450
500
550
600
650
700
Wellenlänge [nm]

Fig. 3

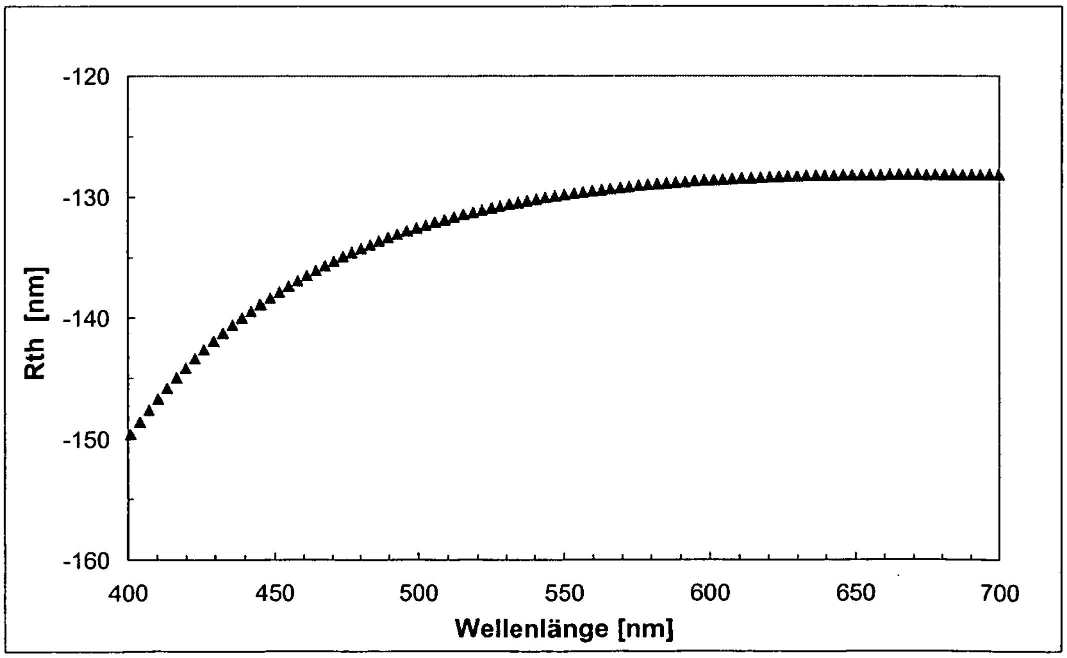
-120
-130
-140
-150
-160
Rth [nm]
400
450
500
550
600
650
700
Wellenlänge [nm]

Fig. 4

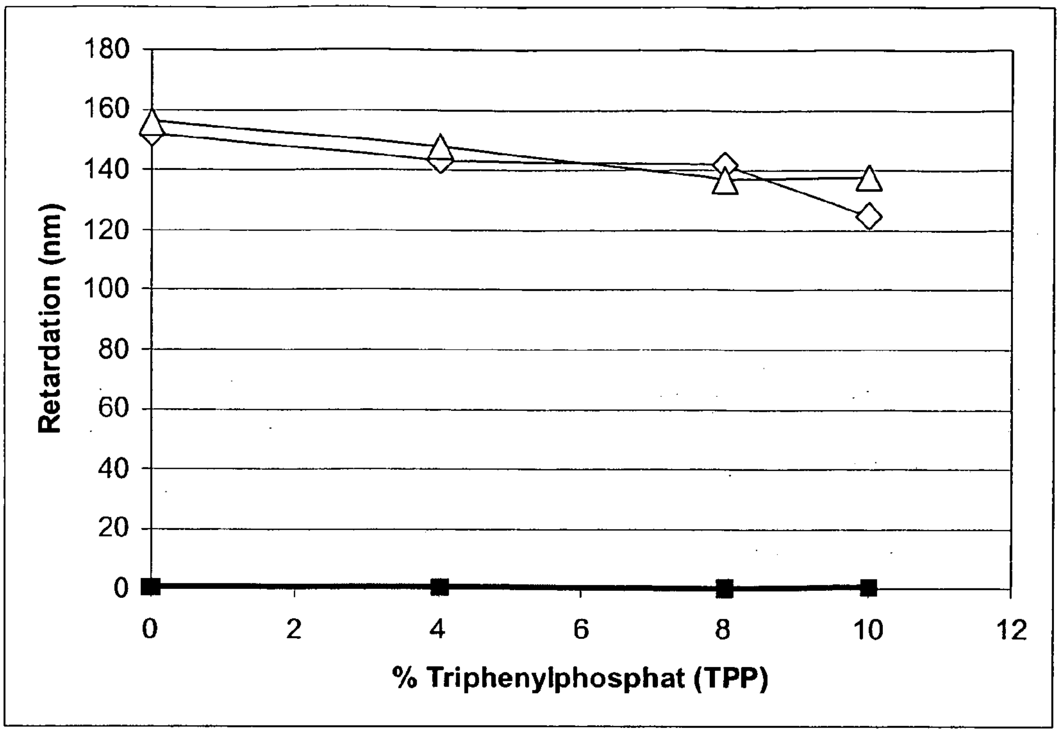
Retardation (nm)
180
160
140
120
100
80
60
40
20
0
0
2
4
6
8
10
12
% Triphenylphosphat (TPP)

Fig. 5

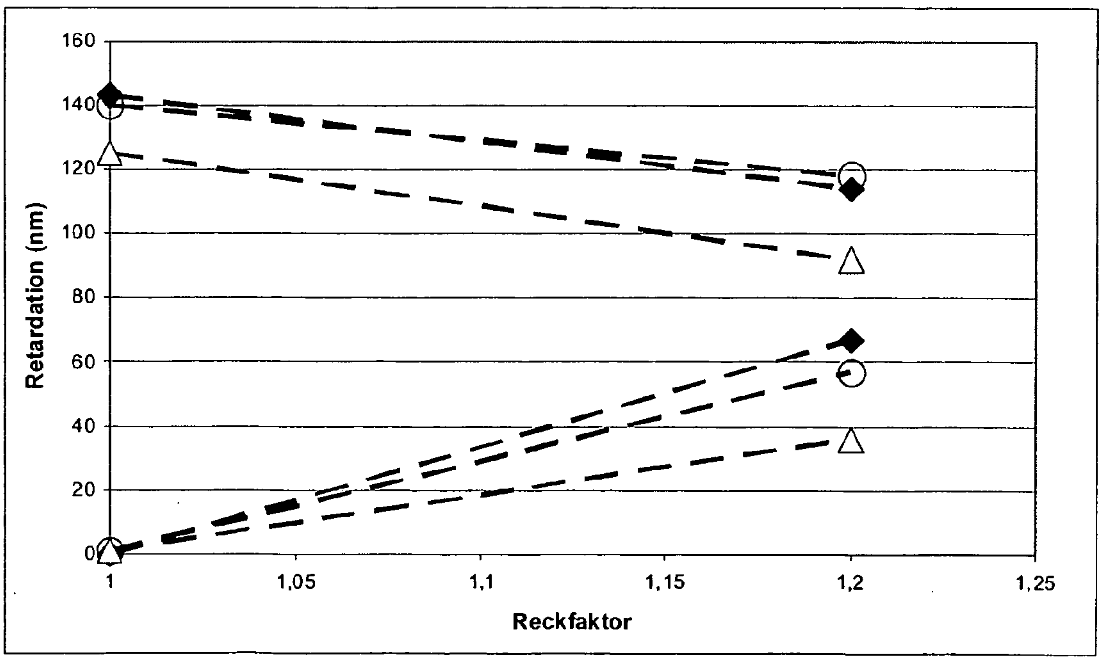
Retardation (nm)
160
140
120
100
80
60
40
20
0
1
1,05
1,1
1,15
1,2
1,25
Reckfaktor

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6559912 B
- US 20030218709 A
- US 6778242 B
- EP 0087102 A1
- EP 0062470 A1
- DE 3227916 A1
- US 20050045064 A1


### In der Beschreibung aufgeführte Nicht-Patentliteratur


- **A. Uchiyama ; T. Yatabe.** Control of Wavelength Dispersion of Birefringence for Oriented Copolycarbonate Films Containing Positive and Negative Birefringent Units. *J. Appl. Phys.,* 2003, vol. 42, 6941-6945